(19) Europäisches Patentamt
European Patent Office
Office européen des brevets

(11) EP 1 160 263 A1

(12) **EUROPEAN PATENT APPLICATION**
published in accordance with Art. 158(3) EPC

(43) Date of publication:
**05.12.2001 Bulletin 2001/49**

(21) Application number: **99943209.9**

(22) Date of filing: **08.09.1999**

(51) Int Cl.7: **C08F 10/00**, C08F 4/658, C08F 4/654

(86) International application number:
**PCT/JP99/04867**

(87) International publication number:
**WO 01/18075 (15.03.2001 Gazette 2001/11)**

(84) Designated Contracting States:
**AT BE CH CY DE DK ES FI FR GB GR IE IT LI LU MC NL PT SE**

(71) Applicant: **Japan Polychem Corporation**
**Tokyo 100-0006 (JP)**

(72) Inventors:
- **YAMAMOTO, Naohiro**
**Japan Polychem Corporation**
**Kamisumachi Kashima-gun Ibaraki 314-0102 (JP)**
- **SODA, Masataka Japan Polychem Corporation**
**Yokkaichi-shi Mie 510-0848 (JP)**
- **GOTOU, Shirou Japan Polychem Corporation**
**Kurashiki-shi Okayama 712-8054 (JP)**

(74) Representative: **VOSSIUS & PARTNER**
**Siebertstrasse 4**
**81675 München (DE)**

# (54) PROCESS FOR PRODUCING ALPHA-OLEFIN POLYMER

(57) An object of the present invention is to provide an α-olefin polymer having excellent molding property, in other words, having an improved ME.

The present invention relates to a process for producing an α-olefin polymer comprising polymerizing an α-olefin in the presence of a Ziegler-Natta catalyst, wherein the polymerization is carried out at a polymerization temperature of 92°C or greater and under a condition that a hydrogen/α-olefin (molar ratio) gas composition upon polymerization and a melt flow rate (MFR: g/10 min) of the α-olefin polymer as measured at 230°C under a load of 2.16 kg satisfy the following formula [I]:

Formula [I]:

$$\text{Log (MFR)} \geq 1.5 \times \log (\text{hydrogen}/\alpha\text{-olefin}) + 4.5.$$

FIG. 1

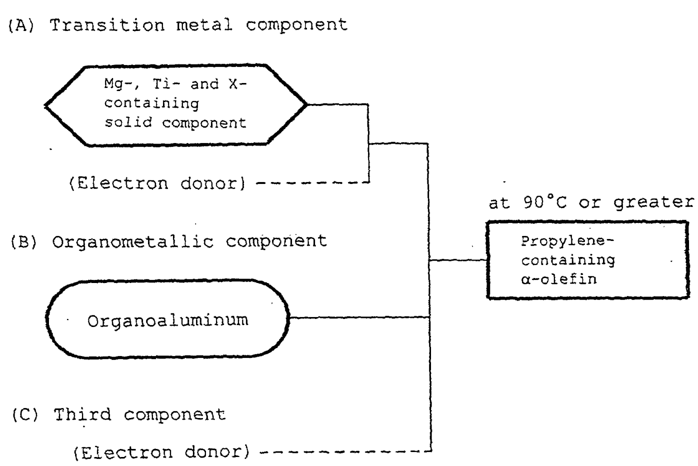


EP 1 160 263 A1

## Description

### Technical Field

The present invention relates to a process for producing propylene-containing α-olefin polymers having excellent molding property.

### Background Art

A magnesium-supported catalyst which contains magnesium, titanium, a halogen and an electron donor enables high stereospecific polymerization and high active polymerization of an α-olefin having 3 or more carbon atoms, making it possible to considerably simplify a production process of such an α-olefin polymer and reduce its production cost. The polymers thus obtained are used in wide fields because of their excellent mechanical properties. They are however not always superior in molding property to polymers obtained by polymerization in the presence of a titanium trichloride catalyst.

Memory effect (MF) is one of the indices showing this molding property. ME is one measure for expressing non-Newtonian flow of a resin. The greater the value, the wider the molecular weight distribution, bringing about good results in molding property. When the ME value is large in injection molding, the molded or formed product has good appearance owing to improved transcription of a resin to the surface of a resin mold. When the ME value is small, on the other hand, there occurs a flow mark (wavy flow pattern) or sink mark (fine concave portion on the surface).

It is conventionally known to mix plural polymers of different molecular weights in order to improve molding property. Mixing is, for example, carried out using plural multi-stage reactor and polymers different in molecular weight are polymerized in respective tanks. It is however not always recommended to use plural reactors in consideration of complicated plant operation and increase in a plant building cost. Mixing can also be conducted under a molten state or under a solution state, but it is disadvantageous in cost because polymers once produced are mixed again. There is accordingly a demand for the development of a process for producing, in only one reactor, an α-olefin polymer having improved molding property. There are proposals of a magnesium-supported catalyst which permits production of an α-olefin polymer having a wide molecular weight distribution without using multi-stage reactors. In JP-A-3-7703, JP-A-2-170803, JP-A-4-136006 or JP-A-4-239008, proposed is a process for producing, in the presence of a magnesium-supported catalyst component, an α-olefin polymer having a wide molecular weight distribution by using two or more electron donors to be added upon polymerization. As far as the present inventors know, at least one of the plural electron donors happens to impair stereoregularity. There is therefore room for further improvement.

An object of the present invention is to overcome the above-described problems and to obtain a polypropylene-containing α-olefin polymer having excellent molding property, in other words, having increased ME.

### Disclosure of the Invention

As a result of an investigation on propylene-containing α-olefin polymers and a process for producing the α-olefin polymers with a view to overcoming the above-described problems, the present inventors have found that these problems can be overcome by a specific polymerization process. Based on such a finding, the present invention has been completed.

In the present invention, there is thus provided a process for producing an α-olefin polymer comprising polymerizing a propylene-containing α-olefin in the presence of a Ziegler-Natta catalyst, wherein the polymerization is carried out at a polymerization temperature of 92°C or greater and under a condition that a gas composition of hydrogen/α-olefin (molar ratio) upon polymerization and a melt flow rate (MFR: g/10 min) of the resulting α-olefin polymer as measured at 230°C under a load of 2.16 kg satisfy the following formula [I]:

Formula [I]

$$\text{Log (MFR)} \geq 1.5 \times \log (\text{hydrogen}/\alpha\text{-olefin}) + 4.5$$

(Effects)

The present invention makes it possible to produce, in a high yield, an α-olefin polymer having an increased ME value, that is, having excellent molding property when used for injection molding, without impairing its stereoregularity.

## Brief Description of the Drawing

FIG. 1 is a flow chart for promoting better understanding of the present invention.

## Best Mode for Carrying Out the Invention

The process for producing a propylene-containing $\alpha$-olefin polymer according to the present invention is characterized in that an $\alpha$-olefin is polymerized under specific polymerization conditions in the presence of a Ziegler-Natta catalyst, particularly, a catalyst comprising the Components (A) and (B) below and if necessary, Component (C).

(Catalyst for polymerization)

The catalyst to be used in the present invention can be prepared by using the below-described Components (A) and (B) and if necessary Component (C) in combination. The term "using in combination" as used herein does not mean that components usable here are only the above-described ones (that is, Components (A), (B) and (C)), but means that use of another component in combination is not excluded within an extent not impairing the effect of the invention.

(1) Solid catalyst component

The solid catalyst component (Component (A)) of the present invention is a solid component (Component (A1)) or a mixture of the solid component (A1) and a specific silicon compound (Component (A2)). Such Component (A) does not exclude a component which is other than these two components but is suited for the object of the present invention.

Component (A1)

The solid component is a stereoregular solid component for polymerization which contains titanium, magnesium and a halogen as essential components. The term "contains as essential components" as used herein means that the solid component may contain elements other than the above-described three components insofar as these elements can satisfy the object of the present invention; these three components may exist, respectively, as optional compounds satisfying the object of the present invention; and these three components may exist in the form bonded to each other.

The solid component containing titanium, magnesium and a halogen is already known. Usable is, for example, that described in JP-A-53-45688, JP-A-54-3894, JP-A-54-31092, JP-A-54-39483, JP-A-54-94591, JP-A-54-118484, JP-A-54-131589, JP-A-55-75411, JP-A-55-90510, JP-A-55-90511, JP-A-55-127405, JP-A-55-147507, JP-A-55-155003, JP-A-56-18609, JP-A-56-70005, JP-A-56-72001, JP-A-56-86905, JP-A-56-90807, JP-A-56-155206, JP-A-57-3803, JP-A-57-34103, JP-A-57-92007, JP-A-57-121003, JP-A-58-5309, JP-A-58-5310, JP-A-58-5311, JP-A-58-8706, JP-A-58-27732, JP-A-58-32604, JP-A-58-32605, JP-A-58-67703, JP-A-58-117206, JP-A-58-127708, JP-A-58-183708, JP-A-58-183709, JP-A-59-149905, JP-A-59-149906 or JP-A-63-108008.

Examples of the magnesium compound to be a magnesium source in the present invention include magnesium dihalide, dialkoxymagnesium, alkoxymagnesium halide, magnesium oxyhalide, dialkylmagnesium, magnesium oxide, magnesium hydroxide and carboxylate salts of magnesium. Of which, magnesium compounds represented by the following formula [1]:

Formula [1]: $$Mg(OR^7)_{2-p}X_p$$

(wherein, $R^7$ represents a hydrocarbon group, preferably a hydrocarbon group having about 1 to 10 carbon atoms, X represents a halogen and p satisfies $0 \leq p \leq 2$) such as magnesium dihalide and dialkoxymagnesium are preferred.

Examples of the titanium compound to be a titanium source include compounds of the following formula [2]:

Formula [2]: $$Ti(OR^8)_{4-q}X_q$$

(wherein, $R^8$ represents a hydrocarbon group, preferably a hydrocarbon group having about 1 to 10 carbon atoms, X represents a halogen and q satisfies $0 \leq q \leq 4$).

Specific examples of the titanium compound include $TiCl_4$, $TiBr_4$, $Ti(OC_2H_5)Cl_3$, $Ti(OC_2H_5)_2Cl_2$, $Ti(OC_2H_5)_3Cl$,

$Ti(O\text{-}i\text{-}C_3H_7)Cl_3$, $Ti(O\text{-}n\text{-}C_4H_9)Cl_3$, $Ti(O\text{-}n\text{-}C_4H_9)_2Cl_2$, Ti $(OC_2H_5)Br_3$, $Ti(OC_2H_5)(O\text{-}n\text{-}C_4H_9)_2Cl$, $Ti(O\text{-}n\text{-}C_4H_9)_3Cl$, Ti $(OC_2H_5)Cl_3$, Ti $(O\text{-}i\text{-}C_4H_9)_2Cl_2$, $Ti(OC_5H_{11})Cl_3$, $Ti(OC_5H_{11})Cl_3$, $Ti(OC_6H_{13})Cl_3$, $Ti(OC_2H_5)_4$, $Ti(O\text{-}n\text{-}C_3H_7)_4$, $Ti(O\text{-}n\text{-}C_4H_9)_4$, $Ti(O\text{-}i\text{-}C_4H_9)_4$, Ti $(On\text{-}C_6H_{13})_4$, $Ti(O\text{-}n\text{-}C_8H_{17})_4$ and Ti $(OCH_2CH(C_2H_5)C_4H_9)_4$.

Molecular compounds obtained by reacting $TiX'_4$ (wherein, X' is a halogen) with an electron donor which will be described later can also be used as a titanium source. Specific examples of such a molecular compound include $TiCl_4{\cdot}CH_3COC_2H_5$, $TiCl_4{\cdot}CH_3CO_2C_2H_5$, $TiCl_4$ $\cdot C_6H_5NO_2$, $TiCl_4{\cdot}CH_3COCl$, $TiCl_4{\cdot}C_6H_5COCl$, $TiCl_4{\cdot}C_6H_5CO_2C_2H_5$, $TiCl_4{\cdot}ClCOC_2H_5$ and $TiCl_4{\cdot}C_4H_4O$.

In addition, titanium compounds such as $TiCl_3$ (including that obtained by reducing $TiCl_4$ with a hydrogen, aluminum metal or organometallic compound), $TiBr_3$, $Ti(OC_2H_5)Cl_2$, $TiCl_2$, dicyclopentadienyltitanium dichloride and cyclopentadienyltitanium trichloride are also usable.

Out of these titanium compounds, $TiCl_4$, $Ti(O\text{-}n\text{-}C_4H_9)_4$ and $Ti(OC_2H_5)Cl_3$ are preferred.

The halogen is usually supplied from the above-exemplified halogen compounds of magnesium and/or titanium. Alternatively it can be supplied from another halogen sources, for example, known halogenation agents, for example, halides of aluminum such as $AlCl_3$, halides of silicon such as $SiCl_4$, halides of phosphorus such as $PCl_3$ and $PCl_5$, halides of tungsten such as $WCl_6$ and halides of molybdenum such as $MoCl_5$. A halogen contained in the catalyst component is fluorine, chlorine, bromine or iodine or mixture thereof, with chlorine being particularly preferred.

As the solid component to be used in the present invention, another component, for example, an aluminum compound such as $Al(OC_2H_5)_3$, $Al(O\text{-}i\text{-}C_3H_7)_3$ or $Al(OCH_3)_2Cl$ or a boron compound such as $B(OCH_3)_3$, $B(OC_2H_5)_3$ or $B(OC_6H_5)_3$ is usable, in addition to the above-described essential components. Such a component does not cause any problem, even if it remains in the solid component as an aluminum or boron component.

This solid component can also be prepared using an electron donor as an internal donor. Particularly when the component (A2) is not added, this electron donor is added.

Examples of the electron donor (internal donor) usable for the preparation of the solid component include oxygen containing electron donors such as alcohols, phenols, ketones, aldehydes, carboxylic acids, esters of an organic acid or inorganic acid, ethers, acid amides and acid anhydrides; nitrogen containing electron donors such as ammonia, amines, nitriles and isocyanates; and sulfur containing electron donors such as sulfonate esters.

More specific examples include:

(1) $C_{1\text{-}18}$ alcohols such as methanol, ethanol, propanol, pentanol, hexanol, octanol, dodecanol, octadecyl alcohol, benzyl alcohol, phenyl ethyl alcohol and isopropylbenzyl alcohol;

(2) $C_{6\text{-}25}$ phenols, which may have an alkyl group, such as phenol, cresol, xylenol, ethyl phenol, propyl phenol, isopropyl phenol, nonyl phenol and naphthol;

(3) $C_{3\text{-}15}$ ketones such as acetone, methyl ethyl ketone, methyl isobutyl ketone, acetophenone and benzophenone;

(4) $C_{2\text{-}15}$ aldehydes such as acetaldehyde, propionaldehyde, octylaldehyde, benzaldehyde, tolualdehyde and naphthoaldehyde;

(5) $C_{2\text{-}20}$ organic acid esters, for example, organic acid monoesters such as methyl formate, methyl acetate, ethyl acetate, vinyl acetate, propyl acetate, octyl acetate, cyclohexyl acetate, ethyl cellosolve acetate, ethyl propionate, methyl butyrate, ethyl valerate, ethyl stearate, methyl chloroacetate, ethyl dichloroacetate, methyl methacrylate, ethyl crotonate, ethyl cyclohexanecarboxylate, methyl benzoate, ethyl benzoate, propyl benzoate, butyl benzoate, octyl benzoate, cyclohexyl benzoate, phenyl benzoate, benzyl benzoate, cellosolve benzoate, methyl toluylate, ethyl toluylate, amyl toluylate, ethyl ethylbenzoate, methyl anisate, ethyl anisate, ethyl ethoxybenzoate, $\gamma$-butyrolactone, $\alpha$-valerolactone, coumarin and phthalide; organic acid polyvalent esters such as diethyl phthalate, dibutyl phthalate, diheptyl phthalate, diethyl succinate, dibutyl maleate, diethyl 1,2-cyclohexanecarboxylate, ethylene carbonate, norbornane dienyl-1,2-dimethylcarboxylate, n-hexyl cyclopropane-1,2-dicarboxylate and diethyl 1,1-cyclobutanedicarboxylate;

(6) inorganic acid esters such as ethyl silicate and butyl silicate;

(7) $C_{2\text{-}15}$ acid halides such as acetyl chloride, benzoyl chloride, toluic acid chloride, anisic acid chloride, phthaloyl chloride and phthaloyl isochloride;

(8) $C_{2\text{-}20}$ ethers such as methyl ether, ethyl ether, isopropyl ether, butyl ether, aluminum ether, tetrahydrofuran, anisole, diphenyl ether, 2,2-dimethyl-1,3-dimethoxypropane, 2,2-diisopropyl-1,3-dimethoxypropane, 2,2-diisobutyl-1,3-dimethoxypropane, 2-isopropyl-2-isobutyl-1,3-dimethoxypropane, 2-isopropyl-2-s-butyl-1,3-dimethoxypropane, 2-t-butyl-2-methyl-1,3-dimethoxypropane, 2-t-butyl-2-isopropyl-1,3-dimethoxypropane, 2,2-dicyclopentyl-1,3-dimethoxypropane, 2,2-dicyclohexyl-1,3-dimethoxypropane, 2,2-diphenyl-1,3-dimethoxypropane, 2,2-dimethyl-1,3-diethoxypropane and 2,2-diisopropyl-1,3-diethoxypropane;

(9) acid amides such as acetic amide, benzoic amide and toluic amide;

(10) amines such as methylamine, ethylamine, diethylamine, tributylamine, piperidine, tribenzylamine, aniline, pyridine, picoline and tetramethylethylenediamine;

(11) nitriles such as acetonitrile, benzonitrile and tolunitrile;

(12) alkoxyester compounds such as ethyl 2-(ethoxymethyl)benzoate, ethyl 2-(t-butoxymethyl)benzoate, ethyl 3-ethoxy-2-phenylpropionate, ethyl 3-ethoxypropionate, ethyl 3-ethoxy-2-s-butylpropionate and ethyl 3-ethoxy-2-t-butylpropionate;

(13) ketoester compounds such as ethyl 2-benzoylbenzoate, ethyl 2-(4'-methylbenzoyl)benzoate and ethyl 2-benzoyl-4,5-dimethylbenzoate; and

(14) sulfonate esters such as methyl benzenesulfonate, ethyl benzenesulfonate, ethyl p-toluenesulfonate, isopropyl p-toluenesulfonate, n-butyl p-toluenesulfonate and s-butyl p-toluenesulfonate.

At least two electron donors exemplified above can be used. Out of these, preferred are organic acid ester compound and acid halide compounds, with diester phthalate compounds, cellosolve acetate ester compounds and dihalide phthalate compounds being particularly preferred.

Component (A2)

As the silicon compound (A2) to be used as an electron donor in the present invention, usable are those represented by the following formula [A]:

$$R^1R^2_{3-m}Si(OR^3)_m \qquad \text{Formula [A]}$$

(wherein, $R^1$ represents a branched aliphatic hydrocarbon group or a cyclic aliphatic hydrocarbon group, $R^2$ represents a hydrocarbon group which may be the same as or different from $R^1$ or a hetero atom-containing hydrocarbon group and m satisfies $1 \leq m \leq 3$).

This silicon compound may be a mixture of several silicon compounds of the formula [A].

In the above formula, a branched or cyclic aliphatic hydrocarbon group is used as $R^1$. When $R^1$ is a branched hydrocarbon group, it is preferred to branch from the carbon atom adjacent to the silicon atom. In this case, preferred branched groups include alkyl, cycloalkyl and aryl (such as phenyl or methyl-substituted phenyl) group. More preferred $R^1$ is a hydrocarbon group wherein the carbon atom adjacent to the silicon atom, that is, the $\alpha$-carbon atom is a secondary or tertiary carbon atom, with that having a tertiary carbon atom as the carbon atom bonded to the silicon atom being particularly preferred. When $R^1$ represents a branched hydrocarbon group, it has usually 3 to 20, preferably 4 to 10 carbon atoms. When $R^1$ is a cyclic aliphatic hydrocarbon group, it has usually 4 to 20, preferably 5 to 10 carbon atoms.

$R^2$ represents a hydrocarbon which may be the same as or different from $R^1$ or a hetero-containing hydrocarbon group. It is preferably a $C_{1-20}$, more preferably $C_{1-10}$ hydrocarbon or hetero-containing hydrocarbon group. As the hetero atom, oxygen, sulfur, nitrogen, phosphorus and silicon atoms are preferred.

$R^3$ represents a $C_{1-20}$, preferably $C_{1-10}$ hydrocarbon group.

As the silicon compound, compounds having (OMe) as one or whole of $(OR^3)$s can be used in the present invention. Out of these, those represented by the following formula [A']:

$$\text{Formula [A'] :} \qquad R^1R^2Si(OMe)_2, \ (Me = CH_3)$$

are particularly preferred.

Specific examples of the compound having (OMe) as one or whole of $(OR^3)$s include:

1: $(CH_3)_3CSi(CH_3)\ (OC_2H_5)\ (OCH_3)$,
2: $(CH_3)_3CSi(CH_3)\ (O\text{-}n\text{-}C_3H_7)\ (OCH_3)$,
3: $(CH_3)_3CSi(CH_3)\ (O\text{-}i\text{-}C_3H_7)\ (OCH_3)$,
4: $(CH_3)_3CSi(CH_3)\ (O\text{-}n\text{-}C_4H_9)\ (OCH_3)$,
5: $(CH_3)_3CSi(CH_3)\ (O\text{-}i\text{-}C_4H_9)\ (OCH_3)$,
6: $(CH_3)_3CSi(CH_3)\ (O\text{-}s\text{-}C_4H_9)\ (OCH_3)$,
7: $(CH_3)_3CSi(CH_3)\ (O\text{-}t\text{-}C_4H_9)\ (OCH_3)$,
8: $(CH_3)_3CSi(CH_3)(O\text{-}n\text{-}C_5H_{11})(OCH_3)$,
9: $(CH_3)_3CSi(C_2H_5)\ (OC_2H_5)\ (OCH_3)$,
10: $(CH_3)_3CSi(C_2H_5)\ (O\text{-}n\text{-}C_3H_7)\ (OCH_3)$,
11: $(CH_3)_3CSi(C_2H_5)\ (O\text{-}i\text{-}C_3H_7)\ (OCH_3)$,
12: $(CH_3)_3CSi(C_2H_5)\ (O\text{-}n\text{-}C_4H_9)\ (OCH_3)$,

13: $(CH_3)_3CSi(C_2H_5)$ $(O\text{-}i\text{-}C_4H_9)$ $(OCH_3)$,
14: $(CH_3)_3CSi(C_2H_5)$ $(O\text{-}s\text{-}C_4H_9)$ $(OCH_3)$,
15: $(CH_3)_3CSi(C_2H_5)$ $(O\text{-}t\text{-}C_4H_9)$ $(OCH_3)$,
16: $(CH_3)_3CSi(C_2H_5)$ $(O\text{-}n\text{-}C_5H_{11})$ $(OCH_3)$,
17: $(CH_3)_3CSi(H\text{-}C_3H_7)$ $(OC_2H_5)$ $(OCH_3)$,
18: $(CH_3)_3CSi$ $(n\text{-}C_3H_7)$ $(O\text{-}n\text{-}C_3H_7)$ $(OCH_3)$,
19: $(CH_3)_3CSi(n\text{-}C_3H_7)$ $(O\text{-}i\text{-}C_3H_7)$ $(OCH_3)$,
20: $(CH_3)_3CSi(n\text{-}C_3H_7)$ $(O\text{-}n\text{-}C_4H_9)$ $(OCH_3)$,
21: $(CH_3)_3CSi(n\text{-}C_3H_7)$ $(O\text{-}i\text{-}C_4H_9)$ $(OCH_3)$,
22: $(CH_3)_3CSi(n\text{-}C_3H_7)$ $(O\text{-}s\text{-}C_4H_9)$ $(OCH_3)$,
23: $(CH_3)_3CSi(n\text{-}C_3H_7)$ $(O\text{-}t\text{-}C_4H_9)$ $(OCH_3)$,
24: $(CH_3)_3CSi(n\text{-}C_3H_7)$ $(O\text{-}n\text{-}C_5H_{11})$ $(OCH_3)$,
25: $(CH_3)_3CSi(i\text{-}C_3H_7)$ $(OC_2H_5)$ $(OCH_3)$,
26: $(CH_3)_3CSi(i\text{-}C_3H_7)$ $(O\text{-}n\text{-}C_3H_7)$ $(OCH_3)$,
27: $(CH_3)_3CSi(i\text{-}C_3H_7)$ $(O\text{-}n\text{-}C_4H_9)$ $(OCH_3)$,
28: $(CH_3)_3CSi(s\text{-}C_4H_9)$ $(OC_2H_5)$ $(OCH_3)$,
29: $(CH_3)_3CSi(s\text{-}C_4H_9)$ $(O\text{-}n\text{-}C_3H_7)$ $(OCH_3)$,
30: $(CH_3)_3CSi(s\text{-}C_4H_9)$ $(O\text{-}n\text{-}C_4H_9)$ $(OCH_3)$,
31: $(CH_3)_3CSi(t\text{-}C_4H_9)$ $(OC_2H_5)$ $(OCH_3)$,
32: $(CH_3)_3CSi(t\text{-}C_4H_9)$ $(O\text{-}n\text{-}C_3H_7)$ $(OCH_3)$,
33: $(CH_3)_3CSi(t\text{-}C_4H_9)$ $(O\text{-}n\text{-}C_4H_9)$ $(OCH_3)$,
34: $(CH_3)$ $(C_2H_5)_2CSi(CH_3)$ $(OC_2H_5)$ $(OCH_3)$,
35: $(CH_3)$ $(C_2H_5)_2CSi(CH_3)$ $(O\text{-}n\text{-}C_3H_7)$ $(OCH_3)$,
36: $(CH_3)$ $(C_2H_5)_2CSi(CH_3)$ $(O\text{-}n\text{-}C_4H_9)$ $(OCH_3)$,
37: $(C_2H_5)_3CSi(CH_3)$ $(OC_2H_5)$ $(OCH_3)$,
38: $(C_2H_5)_3CSi(CH_3)$ $(O\text{-}n\text{-}C_3H_7)$ $(OCH_3)$,
39: $(C_2H_5)_3CSi(CH_3)$ $(O\text{-}n\text{-}C_4H_9)$ $(OCH_3)$,
40:$HC(CH_3)_2C(CH_3)_2Si(CH_3)$ $(OC_2H_5)$ $(OCH_3)$,
41:$HC(CH_3)_2C(CH_3)_2Si(CH_3)$ $(O\text{-}n\text{-}C_3H_7)$ $(OCH_3)$,
42: $HC(CH_3)_2C(CH_3)_2Si(CH_3)$ $(O\text{-}n\text{-}C_4H_9)$ $(OCH_3)$,
43: $(c\text{-}C_5H_9)_2Si(OC_2H_5)(OCH_3)$,
44: $(c\text{-}C_5H_9)_2Si(O\text{-}n\text{-}C_3H_7)$ $(OCH_3)$,
45: $(c\text{-}C_5H_9)_2Si(O\text{-}n\text{-}C_4H_9)$ $(OCH_3)$,
46: $(n\text{-}C_5H_{11})_2Si(OC_2H_5)$ $(OCH_3)$,
47: $(n\text{-}C_5H_{11})_2Si(O\text{-}n\text{-}C_3H_7)$ $(OCH_3)$,
48: $(n\text{-}C_5H_{11})_2Si(O\text{-}n\text{-}C_4H_9)$ $(OCH_3)$,
49: $(c\text{-}C_5H_9)Si(n\text{-}C_3H_7)$ $(OC_2H_5)$ $(OCH_3)$,
50: $(c\text{-}C_5H_9)Si(n\text{-}C_3H_7)$ $(O\text{-}n\text{-}C_3H_7)$ $(OCH_3)$,
51: $(c\text{-}C_5H_9)Si(n\text{-}C_3H_7)$ $(O\text{-}n\text{-}C_4H_9)$ $(OCH_3)$,
52: $(c\text{-}C_5H_9)Si(i\text{-}C_3H_7)$ $(OC_2H_5)$ $(OCH_3)$,
53: $(c\text{-}C_5H_9)Si(i\text{-}C_3H_7)$ $(O\text{-}n\text{-}C_3H_7)$ $(OCH_3)$,
54: $(c\text{-}C_5H_9)Si(i\text{-}C_3H_7)$ $(O\text{-}n\text{-}C_4H_9)$ $(OCH_3)$
55: $(c\text{-}C_5H_{11})Si(c\text{-}C_5H_9)$ $(OC_2H_5)$ $(OCH_3)$,
56: $(c\text{-}C_5H_{11})Si(c\text{-}C_5H_9)$ $(O\text{-}n\text{-}C_3H_7)$ $(OCH_3)$,
57: $(c\text{-}C_5H_{11})Si(c\text{-}C_5H_9)$ $(O\text{-}n\text{-}C_4H_9)$ $(OCH_3)$,
58: $(CH_3)_3CSi(O\text{-}n\text{-}C_5H_{11})$ $(OC_2H_5)$ $(OCH_3)$,
59: $(CH_3)_3CSi(O\text{-}n\text{-}C_5H_{11})$ $(O\text{-}n\text{-}C_3H_7)$ $(OCH_3)$,
60: $(CH_3)_3CSi(O\text{-}n\text{-}C_5H_{11})$ $(O\text{-}n\text{-}C_4H_9)$ $(OCH_3)$,
61: $(CH_3)_3CSi(CH_3)$ $(OCH_3)_2$,
62: $(CH_3)_3CSi(CH(CH_3)_2)$ $(OCH_3)_2$,
63: $(CH_3)_3CSi(C_2H_5)$ $(OCH_3)_2$,
64: $(CH_3)_3CSi(n\text{-}C_3H_7)$ $(OCH_3)_2$,
65: $(CH_3)_3CSi(n\text{-}C_6H_{13})$ $(OCH_3)_2$,
66: $(C_2H_5)_3CSi(CH_3)$ $(OCH_3)_2$,
67: $(CH_3)$ $(C_2H_5)CHSi(CH_3)$ $(OCH_3)_2$,
68: $((CH_3)_2CHCH_2)_2Si(OCH_3)_2$,
69: $(C_2H_5)$ $(CH_3)_2CSi(CH_3)$ $(OCH_3)_2$,
70: $(CH_3)_3CSi(OCH_3)_3$,

71: $(CH_3)$ $(C_2H_5)CHSi(OCH_3)_3$,
72: $(CH_3)_2Ch(CH_3)_2CSi(CH_3)$ $(OCH_3)_2$,
73: $((CH_3)_3C)_2Si(OCH_3)_2$,
74: $(C_2H_5)(CH_3)_2CSi(OCH_3)_3$,
75: $(CH_3)_3CSi(OCH(CH_3)_2)(OCH_3)_2$,
76: $(CH_3)_3CSi(OC(CH_3)_3)(OCH_3)_2$,
77: $((CH_3)_2CH)_2Si(OCH_3)_2$,
78: $(c\text{-}C_5H_9)_2Si(OCH_3)_2$,
79: $(c\text{-}C_5H_9)(CH_3)Si(OCH_3)_2$,
80: $(c\text{-}C_5H_9)((CH_3)_2CHCH_2)Si(OCH_3)_2$,
81: $(c\text{-}C_6H_{11})Si(CH_3)(OCH_3)_2$,
82: $(c\text{-}C_6H_{11})_2Si(OCH_3)_2$,
83: $(c\text{-}C_6H_{11})((CH_3)_2CHCH_2)Si$ $(OCH_3)_2$,
84: $((CH_3)_2CHCH_2)$ $((C_2H_5)(CH_3)CH)$ $Si(OCH_3)_2$,
85: $HC(CH_3)_2C(CH_3)_2Si(CH_3)(OCH_3)_2$,
86: $HC(CH_3)_2C(CH_3)_2Si(OCH_3)_3$,
87:

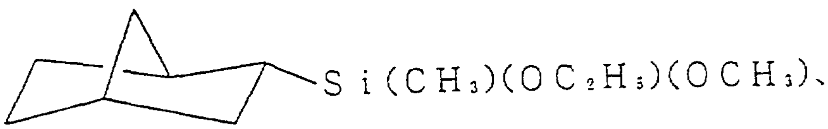

88:

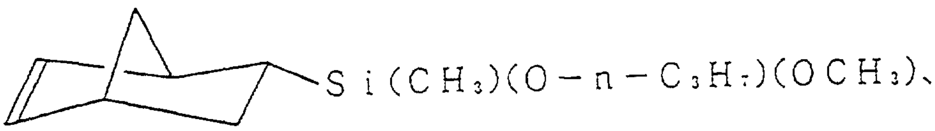

89:

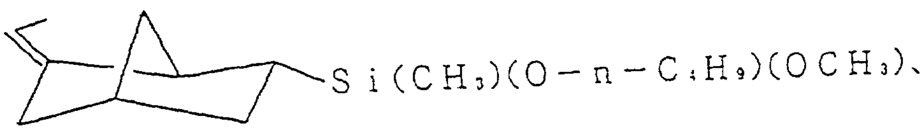

90:

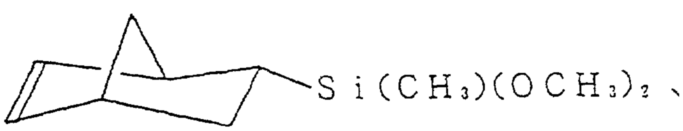

91:

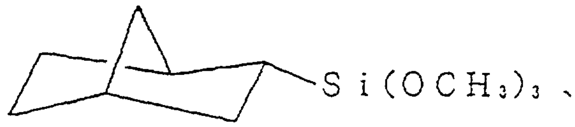

92:

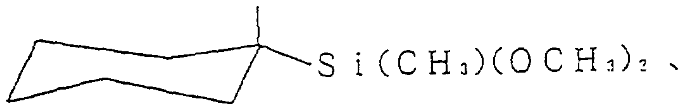

93:

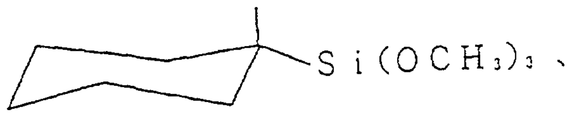

94:

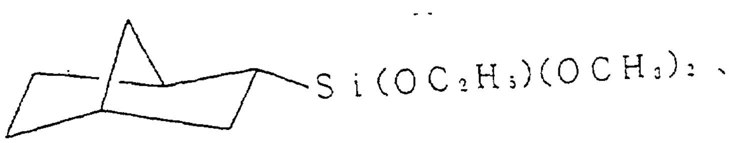

95:

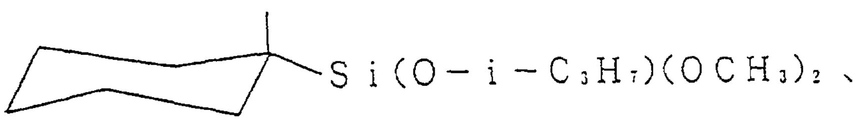

96:

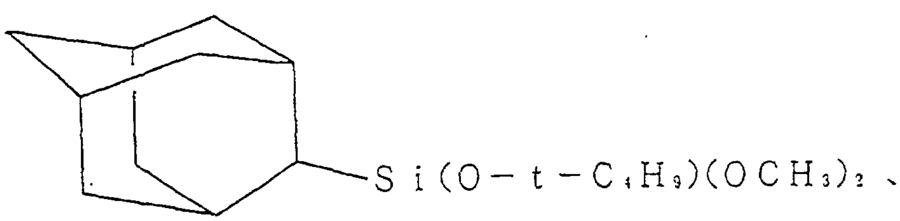

97: $(CH_3)_3CSi(N(C_2H_5)_2)$ $(OCH_3)_2$,
98 : $(CH_3)_3CSi(N(C_2H_5)_2)$ $(OC_2H_5)$ $(OCH_3)$,
99: $(CH_3)_3CSi(N(C_2H_5)_2)$ (O-n-$C_3H_7$) $(OCH_3)$,

100: $(CH_3)_3CSi(N(C_2H_5)_2)$ $(O-n-C_4H_9)(OCH_3)$,
101: $(CH_3)_3CSi(OSi(CH_3)_3)$ $(OC_2H_5)$ $(OCH_3)$,
102: $(CH_3)_3CSi(OSi(CH_3)_3)$ $(O-n-C_3H_7)$ $(OCH_3)$,
103: $(CH_3)_3CSi(OSi(CH_3)_3)$ $(O-n-C_4H_9)$ $(OCH_3)$, and
104: $(CH_3)_3CSi(OSi(CH_3)_3)$ $(OCH_3)_2$.

Specific examples of the silicon compound when a hydrocarbon group having at least 2 carbon atoms is used as $R^3$ include:

105: $(CH_3)_3CSi(CH_3)$ $(OC_2H_5)_2$,
106: $(CH_3)_3CSi(CH_3)$ $(O-n-C_3H_7)_2$,
107: $(CH_3)_3CSi(CH_3)$ $(O-i-C_3H_7)_2$,
108: $(CH_3)_3CSi(CH_3)$ $(O-n-C_4H_9)_2$,
109: $(CH_3)_3CSi(CH_3)$ $(O-i-C_4H_9)_2$,
110: $(CH_3)_3CSi(CH_3)$ $(O-t-C_4H_9)_2$,
111: $(CH_3)_3CSi(CH_3)$ $(O-n-C_6H_{13})_2$,
112: $(CH_3)_3CSi(CH_3)$ $(O-n-C_8H_{17})_2$,
113: $(CH_3)_3CSi(CH_3)$ $(O-n-C_{10}H_{21})_2$,
114: $(CH_3)_3CSi(C_2H_5)$ $(OC_2H_5)_2$,
115: $(CH_3)_3CSi(n-C_3H_7)$ $(OC_2H_5)_2$,
116: $(CH_3)_3CSi(i-C_3H_7)$ $(OC_2H_5)_2$,
117: $(CH_3)_3CSi(n-C_4H_9)$ $(OC_2H_5)_2$,
118: $(CH_3)_3CSi(i-C_4H_9)$ $(OC_2H_5)_2$,
119: $(CH_3)_3CSi(s-C_4H_9)$ $(OC_2H_5)_2$,
120: $(CH_3)_3CSi(t-C_4H_9)$ $(OC_2H_5)_2$,
121: $(CH_3)_3CSi(n-C_5H_{11})$ $(OC_2H_5)_2$,
122: $(CH_3)_3CSi(c-C_5H_9)$ $(OC_2H_5)_2$,
123: $(CH_3)_3CSi(n-C_6H_{13})$ $(OC_2H_5)_2$,
124: $(CH_3)_3CSi(c-C_6H_{11})$ $(OC_2H_5)_2$,
125: $(CH_3)_3CSi(C_2H_5)$ $(O-n-C_3H_7)_2$,
126: $(CH_3)_3CSi(C_2H_5)$ $(O-i-C_3H_7)_2$,
127: $(CH_3)_3CSi(C_2H_5)$ $(O-n-C_4H_9)_2$,
128: $(CH_3)_3CSi(C_2H_5)$ $(O-i-C_4H_9)_2$,
129: $(CH_3)_3CSi(C_2H_5)$ $(O-s-C_4H_9)_2$,
130: $(CH_3)_3CSi(C_2H_5)$ $(O-t-C_4H_9)_2$,
131: $(CH_3)_3CSi(C_2H_5)$ $(O-n-C_6H_{13})_2$,
132: $(CH_3)_3CSi(C_2H_5)$ $(O-n-C_8H_{17})_2$,
133: $(CH_3)_3CSi(C_2H_5)$ $(O-n-C_{10}H_{21})_2$,
134: $(CH_3)_3CSi(i-C_3H_7)$ $(O-n-C_3H_7)_2$,
135: $(CH_3)_3CSi(i-C_3H_7)$ $(O-i-C_3H_7)_2$,
136: $(CH_3)_3CSi(i-C_3H_7)$ $(O-n-C_4H_9)_2$,
137: $(CH_3)_3CSi(i-C_3H_7)$ $(O-i-C_4H_9)_2$,
138: $(CH_3)_3CSi(i-C_3H_7)$ $(O-s-C_4H_9)_2$,
139: $(CH_3)_3CSi(i-C_3H_7)$ $(O-t-C_4H_9)_2$,
140: $(CH_3)_3CSi(i-C_3H_7)$ $(O-n-C_6H_{13})_2$,
141: $(CH_3)_3CSi(i-C_3H_7)$ $(O-n-C_8H_{17})_2$,
142: $(CH_3)_3CSi(i-C_3H_7)$ $(O-n-C_{10}H_{21})_2$,
143: $(CH_3)_3CSi(O-n-C_3H_7)$ $(OC_2H_5)_2$,
144: $(CH_3)_3CSi(O-i-C_3H_7)$ $(OC_2H_5)_2$,
145: $(CH_3)_3CSi(O-n-C_4H_9)$ $(OC_2H_5)_2$,
146: $(CH_3)_3CSi(O-i-C_4H_9)$ $(OC_2H_5)_2$,
147: $(CH_3)_3CSi(O-s-C_4H_9)$ $(OC_2H_5)_2$,
148: $(CH_3)_3CSi(O-t-C_4H_9)$ $(OC_2H_5)_2$,
149: $(CH_3)_3CSi(O-n-C_5H_{11})$ $(OC_2H_5)_2$,
150: $(CH_3)_3CSi(O-c-C_5H_9)$ $(OC_2H_5)_2$,
151: $(CH_3)_3CSi(O-n-C_6H_{13})$ $(OC_2H_5)_2$,
152: $(CH_3)_3CSi(O-c-C_6H_{11})$ $(OC_2H_5)_2$,
153: $(i-C_3H_7)_2Si(OC_2H_5)_2$,

154: $(i-C_4H_9)_2Si(OC_2H_5)_2$,
155: $(s-C_4H_9)_2Si(OC_2H_5)_2$,
156: $(neo-C_5H_{11})_2Si(OC_2H_5)_2$,
157: $(C-C_5H_9)_2Si(OC_2H_5)_2$,
158: $(c-C_5H_9)_2Si(O-n-C_3H_7)_2$,
159: $(c-C_5H_9)_2Si(O-n-C_4H_9)_2$,
160: $(c-C_5H_9)_2Si(O-n-C_5H_{11})_2$,
161: $(c-C_5H_9)_2Si(O-n-C_8H_{17})_2$,
162: $(c-C_6H_{11})_2Si(OC_2H_5)_2$,
163: $(C-C_6H_{11})_2Si(O-n-C_3H_7)_2$,
164: $(c-C_6H_{11})_2Si(O-n-C_4H_9)_2$,
165: $(c-C_5H_{11})_2Si(O-n-C_5H_{11})_2$,
166: $(c-C_6H_{11})_2Si(O-n-C_8H_{17})_2$,
167: $(c-C_6H_{11})Si(CH_3)$ $(OC_2H_5)_2$,
168: $(c-C_6H_{11})Si(CH_3)$ $(O-n-C_3H_7)_2$,
169: $(c-C_6H_{11})Si(CH_3)$ $(O-n-C_4H_9)_2$,
170: $(c-C_6H_{11})Si(CH_3)$ $(O-n-C_5H_{11})_2$,
171: $(c-C_6H_{11})Si(CH_3)$ $(O-n-C_8H_{17})_2$,
172: $(c-C_6H_{11})Si(C_2H_5)$ $(OC_2H_5)_2$,
173: $(c-C_6H_{11})Si(n-C_4H_9)$ $(OC_2H_5)_2$,
174: $(c-C_6H_{11})Si(c-C_5H_9)$ $(OC_2H_5)_2$,
175: $(C_2H_5)_3CSi(CH_3)$ $(OC_2H_5)_2$,
176: $(C_2H_5)_3CSi(CH_3)$ $(O-n-C_3H_7)_2$,
177: $(C_2H_5)_3CSi(CH_3)$ $(O-i-C_3H_7)_2$,
178: $(C_2H_5)_3CSi(CH_3)$ $(O-n-C_4H_9)_2$,
179: $(C_2H_5)_3CSi(CH_3)$ $(O-i-C_4H_9)_2$,
180: $(C_2H_5)_3CSi(CH_3)$ $(O-t-C_4H_9)_2$,
181: $(C_2H_5)_3CSi(CH_3)$ $(O-n-C_6H_{13})_2$,
182: $(C_2H_5)_3CSi(CH_3)$ $(O-n-C_8H_{17})_2$,
183: $(C_2H_5)_3CSi(CH_3)$ $(O-n-C_{10}H_{21})_2$,
184: $(C_2H_5)_3CSi(C_2H_5)$ $(OC_2H_5)_2$,
185: $(C_2H_5)_3CSi(n-C_3H_7)$ $(OC_2H_5)_2$,
186: $(C_2H_5)_3CSi(i-C_3H_7)$ $(OC_2H_5)_2$,
187: $(C_2H_5)_3CSi(n-C_4H_9)$ $(OC_2H_5)_2$,
188: $(C_2H_5)_3CSi(i-C_4H_9)$ $(OC_2H_5)_2$,
189: $(C_2H_5)_3CSi(s-C_4H_9)$ $(OC_2H_5)_2$,
190: $(C_2H_5)_3CSi(t-C_4H_9)$ $(OC_2H_5)_2$,
191: $(C_2H_5)_3CSi(n-C_5H_{11})$ $(OC_2H_5)_2$,
192: $(C_2H_5)_3CSi(c-C_5H_{11})$ $(OC_2H_5)_2$,
193: $(C_2H_5)_3CSi(n-C_6H_{13})$ $(OC_2H_5)_2$,
194: $(C_2H_5)_3CSi(c-C_6H_{11})$ $(OC_2H_5)_2$,
195: $H(CH_3)_2C(CH_3)_2CSi(CH_3)$ $(OC_2H_5)_2$,
196: $H(CH_3)_2C(CH_3)_2CSi(C_2H_5)$ $(OC_2H_5)_2$,
197:$H(CH_3)_2C(CH_3)_2CSi(n-C_3H_7)$ $(OC_2H_5)_2$,
198:$H(CH_3)_2C(CH_3)_2CSi(i-C_3H_7)$ $(OC_2H_5)_2$,
199:$H(CH_3)_2C(CH_3)_2CSi(n-C_4H_9)$ $(OC_2H_5)_2$,
200: $H(CH_3)_2C(CH_3)_2CSi(O-n-C_3H_7)_2$,
201: $H(CH_3)_2C(CH_3)_2CSi(CH_3)$ $(O-i-C_3H_7)_2$,
202:$H(CH_3)_2C(CH_3)_2CSi(CH_3)$ $(O-n-C_4H_9)_2$,
203: $H(CH_3)_2C(CH_3)_2CSi(C_2H_5)$ $(O-n-C_3H_7)_2$,
204: $(CH_3)_2(C_2H_5)CSi(CH_3)$ $(OC_2H_5)_2$,
205: $(CH_3)_2(C_2H_5)CSi(CH_3)$ $(O-n-C_3H_7)_2$,
206: $(CH_3)_2(C_2H_5)CSi(CH_3)$ $(O-n-C_4H_9)_2$,
207: $(CH_3)_2(C_2H_5)CSi(C_2H_5)$ $(O-n-C_4H_9)_2$,
208: $(CH_3)_2CSi(OC_2H_5)_3$,
209: $(CH_3)_2CSi(O-n-C_3H_7)_3$,
210: $(CH_3)_3CSi(O-i-C_3H_7)_3$,
211: $(CH_3)_3CSi(O-n-C_4H_9)_3$,

212: $(CH_3)_3CSi(O\text{-}i\text{-}C_4H_9)_3$,
213: $(CH_3)_3CSi(O\text{-}t\text{-}C_4H_9)_3$,
214: $(CH_3)_3CSi(O\text{-}n\text{-}C_6H_{13})_3$,
215: $(CH_3)_3CSi(O\text{-}n\text{-}C_8H_{17})_3$,
216: $(CH_3)_3CSi(O\text{-}n\text{-}C_{10}H_{21})_3$,
217: $(CH_3)_2(C_2H_5)CSi(OC_2H_5)_3$,
218: $(CH_3)_2(C_2H_5)CSi(O\text{-}n\text{-}C_3H_7)_3$,
219: $(CH_3)_2(C_2H_5)CSi(O\text{-}i\text{-}C_3H_7)_3$,
220: $(CH_3)_2(C_2H_5)CSi(O\text{-}n\text{-}C_4H_9)_3$,
221: $(CH_3)_2(C_2H_5)CSi(O\text{-}i\text{-}C_4H_9)_3$,
222: $(CH_3)_2(C_2H_5)CSi(O\text{-}t\text{-}C_4H_9)_3$,
223: $(CH_3)_2(C_2H_5)CSi(O\text{-}n\text{-}C_6H_{13})_3$,
224: $(CH_3)_2(C_2H_5)CSi\ (O\text{-}n\text{-}C_8H_{17})_3$,
225: $(CH_3)_2(C_2H_5)CSi(O\text{-}n\text{-}C_{10}H_{21})_3$,
226: $(CH_3)\ (C_2H_5)_2CSi(OC_2H_5)_3$,
227: $(CH_3)\ (C_2H_5)_2CSi(O\text{-}n\text{-}C_3H_7)_3$,
228: $(CH_3)\ (C_2H_5)_2CSi(O\text{-}i\text{-}C_3H_7)_3$,
229: $(CH_3)\ (C_2H_5)_2CSi(O\text{-}n\text{-}C_4H_9)_3$,
230: $(CH_3)\ (C_2H_5)_2CSi(O\text{-}i\text{-}C_4H_9)_3$,
231: $(CH_3)\ (C_2H_5)_2CSi(O\text{-}t\text{-}C_4H_9)_3$,
232: $(CH_3)\ (C_2H_5)_2CSi(O\text{-}n\text{-}C_6H_{13})_3$,
233: $(CH_3)\ (C_2H_5)_2CSi(O\text{-}n\text{-}C_8H_{17})_3$,
234: $(CH_3)\ (C_2H_5)_2CSi(O\text{-}n\text{-}C_{10}H_{21})_3$,
235:$H(CH_3)_2C(CH_3)_2CSi(OC_2H_5)_3$,
236: $H(CH_3)_2C(CH_3)_2CSi(O\text{-}n\text{-}C_3H_7)_3$,
237:$H(CH_3)_2C(CH_3)_2CSi(O\text{-}i\text{-}C_3H_7)_3$,
238: $H(CH_3)_2C(CH_3)_2CSi(O\text{-}n\text{-}C_4H_9)_3$,
239:$H(CH_3)_2C(CH_3)_2CSi(O\text{-}i\text{-}C_4H_9)_3$,
240: $H(CH_3)_2C(CH_3)_2CSi(O\text{-}t\text{-}C_4H_9)_3$,
241:$H(CH_3)_2C(CH_3)_2CSi(O\text{-}n\text{-}C_6H_{13})_3$,
242: $H(CH_3)_2C(CH_3)_2CSi(O\text{-}n\text{-}C_8H_{17})_3$,
243: $H(CH_3)_2C(CH_3)_2CSi(O\text{-}n\text{-}C_{10}H_{21})_3$,
244: $(CH_3)_3CSi(CH_3)\ (OC_2H_5)\ (O\text{-}n\text{-}C_3H_7)$,
245: $(CH_3)_3CSi(CH_3)\ (OC_2H_5)\ (O\text{-}n\text{-}C_4H_9)$,
246: $(CH_3)_3CSi(CH_3)\ (OC_2H_5)\ (O\text{-}n\text{-}C_8H_{17})$,
247: $(c\text{-}C_5H_9)_2Si(OC_2H_5)_2$,
248: $((CH_3)_2CHCH_2)\ ((CH_3)_2CH)Si(O\text{-}n\text{-}C_5H_{11})_2$,
249:

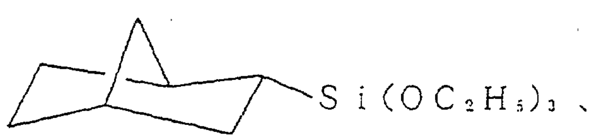

250:

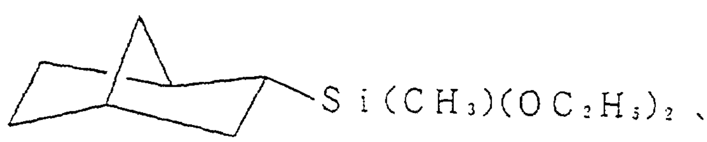

251:

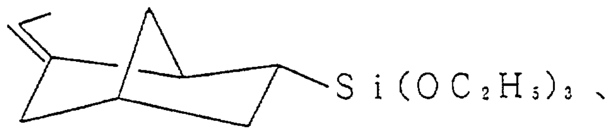

252:

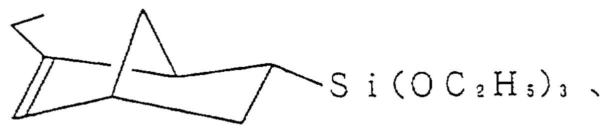

253:

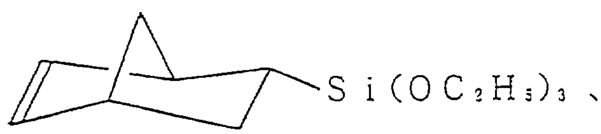

254:

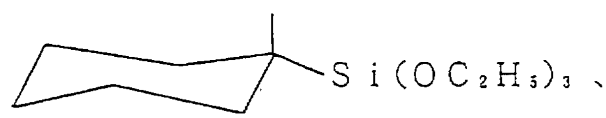

255:

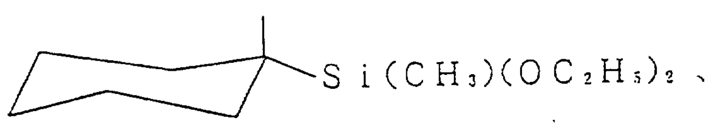

256:

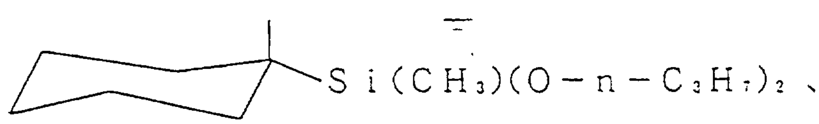

257:

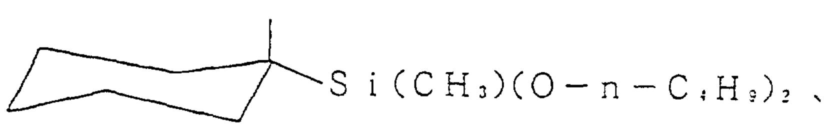

258:

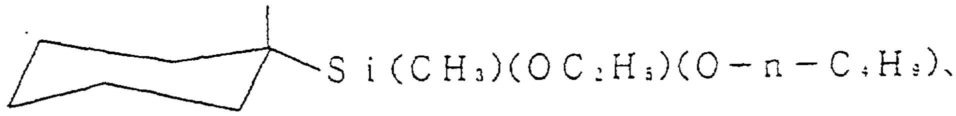

259:

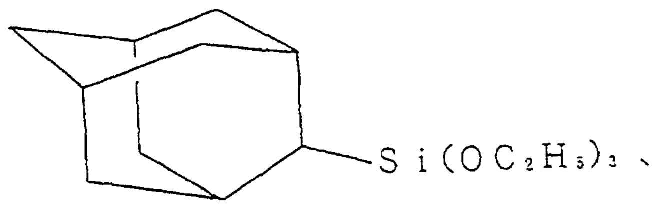

260: $(CH_3)_3CSi(N(C_2H_5)_2)$ $(OC_2H_5)_2$, and
261: $(CH_3)_3CSi(OSi(CH_3)_3)$ $(OC_2H_5)_2$

Upon preparation, Component (A) of the present invention may contain optional components as needed, in addition to the above-described components. Suitable compounds usable as such an optional component will next be described.

(a) Vinylsilane compound

A vinylsilane compound has a structure wherein at least one hydrogen atom of monosilane ($SiH_4$) has been substituted with a vinyl group ($CH_2$=CH-) and some of the other hydrogen atoms have been substituted with a halogen (preferably, Cl), an alkyl (preferably a $C_{1-12}$ hydrocarbon group), an aryl group (preferably, phenyl), an alkoxy group (preferably $C_{1-12}$ alkoxy group) or the like.

Specific examples of the vinyl silane compound include:

$CH_2$=CH-$SiH_3$, $CH_2$=CH-$SiH_2(CH_3)$,
$CH_2$=CH-$SiH(CH_3)_2$, $CH_2$=CH-$Si(CH_3)_3$,
$CH_2$=CH-$SiCl_3$, $CH_2$=CH-$SiCl_2(CH_3)$,
$CH_2$=CH-$SiCl(CH_3)_2$, $CH_2$=CH-SiH(Cl)($CH_3$),
$CH_2$=CH-$Si(C_2H_5)_3$, $CH_2$=CH-$SiCl(C_2H_5)_2$,
$CH_2$=CH-$SiCl_2(C_2H_5)$, $CH_2$=CH-$Si(CH_3)_2(C_2H_5)$,
$CH_2$=CH-$Si(CH_3)(C_2H_5)_2$, $CH_2$=CH-Si(n-$C_4H_9$),
$CH_2$=CH-$Si(C_5H_5)_3$, $CH_2$=CH-$Si(CH_3)(C_5H_5)_2$,
$CH_2$=CH-$Si(CH_3)_2(C_6H_5)$,
$CH_2$=CH-$Si(CH_3)_2(C_6H_4CH_3)$,
($CH_2$=CH)$(CH_3)_2$Si-O-$Si(CH_3)_2$(CH=$CH_2$),
($CH_2$=CH)$_2SiH_2$, ($CH_2$=CH)$_2SiCl_2$,
($CH_2$=CH)$_2Si(CH_3)_2$, ($CH_2$=CH)$_2Si(C_6H_5)_2$

(b) Organometallic compound of a Group I to III metal of the periodic table

Organometallic compounds of a Group I to III metal of the periodic table are also usable. The organometallic compound of a Group I to III metal of the periodic table to be used in the present invention has at least one organic group-metal bond. As the organic group, a hydrocarbyl group having about 1 to 20 carbon atoms, preferably about 1 to 6 carbon atoms are typical. In the organometallic compound which has at least one valence satisfied with one organic group, the remaining valence (if any) of the metal is satisfied with a hydrogen atom, a halogen atom, a hydrocarbyloxy group (a hydrocarbyl group having about 1 to 20 carbon atoms, preferably about 1 to 6 carbon atoms) or a corresponding metal [for example, -O-Al($CH_3$)- in methyl alumoxane] via an oxygen atom.

Specific examples of such an organometallic compound include:

(1) organolithium compounds such as methyl lithium, n-butyl lithium and tertiary butyl lithium;
(2) organomagnesium compounds such as butylethyl magnesium, dibutyl magnesium, hexylethyl magnesium, butyl magnesium chloride and tertiary butyl magnesium bromide;
(3) organozinc compounds such as diethylzinc and dibutylzinc ; and
(4) organoaluminum compounds such as trimethyl aluminum, triethyl aluminum, triisobutyl aluminum, tri-n-hexyl aluminum, tri-n-octyl aluminum, diethylaluminum chloride, diethylaluminum hydride, diethylaluminum ethoxide, ethylaluminum sesquichloride, ethylaluminum dichloride and methyl alumoxane. Of these, organoaluminum compounds are particularly preferred.

The above-described optional components (1) and (2) can be used either singly or in combination. Use of these optional components improve the effects of the present invention further.

<u>Preparation of Component (A):</u>

Component (A) can be prepared by bringing constituents of Component (A) and if necessary, the above-described optional components into contact each other stepwise or temporarily and then, washing the reaction product with an organic solvent, for example, a hydrocarbon solvent or a hydrocarbon halide solvent in the course or end of the step.

Upon preparation, it is possible to prepare a solid product having as essential components titanium, magnesium and a halogen and then bringing it with the silicon compound of the formula [A] (so-called two-stage process) or to prepare, in one stage, the solid product having as essential components titanium, magnesium and a halogen in the presence of this silicon compound (so-called one-stage process). The former one is preferred.

Although conditions for bringing the constituents of Component (A) into contact each other are not predetermined insofar as the effects of the present invention can be recognized under them, the following conditions are usually preferred. The contact temperature is about -50 to 200°C, preferably 0 to 100°C. Examples of the contacting method include mechanical method using a rotary ball mill, vibrating mill, jet mill or medium stirring pulverizer and contacting by stirring in the presence of an inert diluent. As the inert diluent, aliphatic or aromatic hydrocarbon, halohydrocarbon or polysiloxane can be used.

No limitation is imposed on the amount of the constituents of Component (A) insofar as the effects of the present invention can be recognized. That falling within the following range is usually preferred. The titanium compound is preferably used at a molar ratio of 0.0001 to 1000 relative to the amount of the magnesium compound used, with a range of 0.01 to 10 being more preferred. When a compound serving as a halogen source is used, its molar ratio preferably falls within a range of 0.01 to 1000, more preferably 0.1 to 100 relative to the amount of magnesium employed whether the titanium compound and(or) magnesium compound contains a halogen or not. The amount of the silicon compound as Component (A2) falls within a range of 0.01 to 1000, preferably 0.1 to 100 in terms of an atomic ratio (silicon/titanium) relative to the titanium component constituting Component (A).

When the vinylsilane compound is used, its using amount preferably falls within a range of 0.001 to 1000, preferably 0.01 to 100 molar ratios relative to the titanium component constituting Component (A). When the aluminum or boron compound is used, its amount preferably falls within a range of 0.001 to 100, more preferably 0.01 to 1 molar ratio relative to the amount of the magnesium compound. When the electron donor is used, its amount preferably falls within a range of 0.001 to 10, preferably 0.01 to 5 molar ratio relative to the amount of the magnesium compound.

Component (A) is prepared, for example, by bringing Component (A1) and Component (A2) and if necessary, another component such as electron donor into contact. Specific examples of the production process will be described below.

(1) A method of bringing a magnesium halide and if necessary, an electron donor, titanium-containing compound and/or silicon compound into contact.
(2) A method of treating alumina or magnesia with a phosphorus halide compound and then bringing the resulting compound in contact with a magnesium halide, electron donor, halogen-containing titanium compound and/or silicon compound.
(3) A method of bringing a magnesium halide, titanium tetraalkoxide and a specific polymer silicon compound into contact, bringing the solid component thus obtained into contact with a titanium halide compound and/or silicon halogen compound, washing the reaction product with an inert organic solvent and then bringing it into contact with a silicon compound or bringing each of them into contact separately.
As the polymer silicon compound, suited is that represented by the following formula:

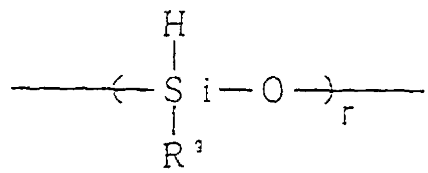

(wherein, $R^9$ represents a hydrocarbon atom having about 1 to 10 carbon atoms and r is a polymerization degree permitting this polymer silicon compound to have a viscosity of about 1 to 100 centistokes).

Preferred specific examples include methyl hydrogen polysiloxane, ethyl hydrogen polysiloxane, phenyl hydrogen polysiloxane, cyclohexyl hydrogen polysiloxane, 1,3,5,7-tetramethylcyclotetrasiloxane and 1,3,5,7,9-pentamethylcyclopentasiloxane.

(4) A method of bringing a titanium compound and/or a silicon compound into contact with a solid component which has been precipitated, using a halogenation agent or a titanium halogen compound, from a solution of a magnesium compound in a titanium tetraalkoxide and/or electron donor; or bringing each of them into contact separately.

(5) A method of reacting an organomagnesium compound such as a Grignard reagent with a halogenation agent, reducing agent or the like, bringing the reaction product into contact with an electron donor as needed and then bringing it into contact with a titanium compound and/or silicon compound; or bringing each of them in contact separately.

(6) A method of bringing an alkoxymagnesium compound into contact with a halogenation agent and/or titanium compound in the presence or absence of an electron donor; or bringing each of them into contact separately.

Out of these preparation processes, (1), (3), (4) and (6) are preferred.

Component (A) can be washed with an inert organic solvent, for example, an aliphatic or aromatic hydrocarbon solvent (ex. hexane, heptane, toluene or dicyclohexane) or a hydrocarbon halide solvent (ex. n-butyl chloride, 1,2-dichloroethylene, carbon tetrachloride or chlorobenzene) in the course and(or) at the end of the preparation process.

Component (A) to be used in the present invention can be used as a product obtained by a preliminary polymerization step wherein polymerization is conducted by bringing it into contact with a vinyl-containing compound such as olefin, a diene compound or a styrene compound. Specific examples of the olefin to be used upon preliminary polymerization include $C_{2-20}$ ones such as ethylene, propylene, 1-butene, 3-methylbutene-1, 1-penten, 1-hexne, 4-methylpentene-1,1-octene, 1-decene, 1-undecene and 1-eicosene. Specific examples of the diene compound include 1,3-butadiene, isoprene, 1,4-hexadiene, 1,5-hexadiene, 1,3-pentadiene, 1,4-pentadiene, 2, 4-pentadiene, 2, 6-octadiene, cis-2, trans-4-hexadiene, trans-2,trans-4-hexadiene, 1,3-heptadiene, 1,4-heptadiene, 1,5-heptadiene, 1,6-heptadiene, 2,4-heptadiene, dicyclopentadiene, 1,3-cyclohexadiene, 1,4-cyclohexadiene, cyclopentadiene, 1,3-cyclohetadiene, 4-methyl-1,4-hexadiene, 5-methyl-1,4-hexadiene, 1,9-decadiene, 1,13-tetradecadiene, p-divinylbenzene, m-divinylbenzene, o-divinylbenzene and dicyclopentadiene. Specific examples of the styrene compound include styrene, $\alpha$-methylstyrene, allylbenzene and chlorostyrene.

No limitation is imposed on the reaction conditions of the titanium compound with the vinyl-containing compound insofar as the effects of the present invention can be recognized under them. The conditions within the below-described range are usually preferred. The preliminary polymerization amount of the vinyl-containing compound falls within a range of 0.001 to 100 g, preferably 0.1 to 50 g, more preferably 0.5 to 10 g per g of the titanium solid component. The reaction temperature upon preliminary polymerization is -150 to 150°C, preferably 0 to 100°C. It is preferred to be lower than the temperature of "main polymerization", that is, polymerization of an $\alpha$-olefin. In general, the reaction is preferably conducted under stirring and it may be effected in the presence of an inert solvent such as n-hexane or n-heptane.

(2) Organoaluminum compound component

As the organoaluminum compound component (Component (B)) be used in the present invention, usable are those represented by the following formula [B-1] or [B-2] :

Formula [B-1]: $R^{10}_{3-s}AlX_s$

$$\text{Formula [B-2]:} \quad R^{11}_{3-t}Al(OR^{12})_t$$

(wherein, $R^{10}$ and $R^{11}$ each independently represents a $C_{1-20}$ hydrocarbon group or a hydrogen atom, $R^{12}$ represents a hydrocarbon group, X represents a halogen atom, s satisfies $0 \leq s < 3$, and t satisfies $0 < t < 3$.

Specific examples include (1) trialkylaluminums such as trimethylaluminum, triethylaluminum, triisobutylaluminum, tri-n-hexylaluminum, tri-n-octylaluminum and tri-n-decylaluminum; (2) alkylaluminum halides such as diethylaluminum monochloride, diisobutylaluminum monochloride, ethylaluminum sesquichloride and ethylaluminum dichloride; (3) alkylaluminum hydrides such as diethylaluminum hydride and diisobutylaluminum hydride; and (4) alkylaluminum alkoxides such as diethylaluminum ethoxide and diethylaluminum phenoxide.

With the above-exemplified organoaluminum compounds (1) to (4), another organometallic compound, for example, an alkylaluminum alkoxide represented by the below-described formula [B-3] can be used in combination.

$$\text{Formula [B-3]:} \quad R^{13}_{3-u}Al(OR^{14})_u$$

(wherein, $R^{13}$ and $R^{14}$ are the same or different and each independently represents a $C_{1-20}$ hydrocarbon group and u satisfies $0 < u \leq 3$).

For example, triethylaluminum and diethylaluminum ethoxide, diethylaluminum monochloride and diethylaluminum ethoxide, ethylaluminum dichloride and ethylaluminum diethoxide, and triethylaluminum, diethylaluminum ethoxide and diethylaluminum monochloride can be used in combination.

The organoaluminum compound and the titanium component in the solid catalyst are generally used at an Al/Ti ratio of 1 to 1000 moles, with an Al/Ti ratio of 10 to 500 moles being preferred.

(3) <u>Silicon compound component</u>

As the silicon compound to be used as Component (C) in the present invention, usable are those represented by the below-described formula [C]:

$$\text{Formula [C] :} \quad R^4R^5_{3-m}Si(OR^6)_m$$

(wherein, $R^4$ represents a branched aliphatic hydrocarbon group or a cyclic aliphatic hydrocarbon group, $R^5$ represents a hydrocarbon group which may be the same as or different from $R^4$ or a hetero-containing hydrocarbon group, $R^6$ represents a hydrocarbon group and n satisfies $1 \leq m \leq 3$).

As the silicon compound, a mixture of a plurality of silicon compounds of the formula [C] may be used.

In the above formula, a branched hydrocarbon group or a cyclic aliphatic hydrocarbon group is used as $R^4$. When $R^4$ is a branched hydrocarbon group, it is preferred to branch from the carbon atom adjacent to the silicon atom, In this case, preferred branched groups include alkyl, cycloalkyl and aryl (such as phenyl or methyl-substituted phenyl) group. More preferred $R^4$ is a branched hydrocarbon group having, as the carbon atom adjacent to the silicon atom, that is, the $\alpha$-carbon atom, a secondary or tertiary carbon atom, with that having, as the carbon atom bonded to the silicon atom, a tertiary carbon being preferred. When $R^4$ represents a branched hydrocarbon group, it has usually 3 to 20, preferably 4 to 10 carbon atoms. When $R^4$ is a cyclic aliphatic hydrocarbon group, it has usually 4 to 20, preferably 5 to 10 carbon atoms.

$R^5$ preferably represents a hydrocarbon group which may be the same as or different from $R^4$ or a hetero-containing hydrocarbon group. It preferably is a $C_{1-20}$, preferably $C_{1-10}$ hydrocarbon group or hetero-containing hydrocarbon group. As the hetero atom, oxygen, sulfur, nitrogen, phosphorus and silicon atoms are preferred.

$R^6$ represents a $C_{1-20}$, preferably $C_{1-10}$ hydrocarbon group.

As the silicon compound usable in the present invention, compounds having (OMe) as one or whole of $(OR^6)$ s can be used. Out of these, those represented by the following formula [C']:

$$\text{Formula [C'] :} \quad R^4R^5Si(OMe)_2, \ (Me = CH_3)$$

are particularly preferred.

Specific examples of the compound having (OMe) as one or whole of $(OR^6)$s include:

262: $(CH_3)_3CSi(CH_3)\ (OC_2H_5)\ (OCH_3)$,

263: $(CH_3)_3CSi(CH_3)$ (O-n-$C_3H_7$) ($OCH_3$),
264: $(CH_3)_3CSi(CH_3)$ (O-i-$C_3H_7$) ($OCH_3$),
265: $(CH_3)_3CSi(CH_3)$ (O-n-$C_4H_9$) ($OCH_3$),
266: $(CH_3)_3CSi(CH_3)$(O-i-$C_4H_9$) ($OCH_3$),
267: $(CH_3)_3CSi(CH_3)$ (O-s-$C_4H_9$) ($OCH_3$),
268: $(CH_3)_3CSi(CH_3)$ (O-t-$C_4H_9$) ($OCH_3$),
269: $(CH_3)_3CSi(CH_3)$ (O-n-$C_5H_{11}$) ($OCH_3$),
270: $(CH_3)_3CSi(C_2H_5)$ ($OC_2H_5$) ($OCH_3$),
271: $(CH_3)_3CSi(C_2H_5)$ (O-n-$C_3$H7) ($OCH_3$),
272: $(CH_3)_3CSi(C_2H_5)$ (O-i-$C_3H_7$) ($OCH_3$),
273: $(CH_3)_3CSi(C_2H_5)$ (O-n-$C_4H_9$) ($OCH_3$),
274: $(CH_3)_3CSi(C_2H_5)$ (O-i-$C_4H_9$) ($OCH_3$),
275: $(CH_3)_3CSi(C_2H_5)$ (O-s-$C_4H_9$) ($OCH_3$),
276: $(CH_3)_3CSi(C_2H_5)$ (O-t-$C_4H_9$) ($OCH_3$),
277: $(CH_3)_3CSi(C_2H_5)$ (O-n-$C_5H_{11}$) ($OCH_3$),
278: $(CH_3)_3CSi$(n-$C_3H_7$) ($OC_2H_5$) ($OCH_3$),
279: $(CH_3)_3CSi$(n-$C_3H_7$) (O-n-$C_3H_7$) ($OCH_3$),
280: $(CH_3)_3CSi$(n-$C_3H_7$) (O-i-$C_3H_7$) ($OCH_3$),
281: $(CH_3)_3CSi$(n-$C_3H_7$) (O-n-$C_4H_9$) ($OCH_3$),
282: $(CH_3)_3CSi$(n-$C_3H_7$) (O-i-$C_4H_9$) ($OCH_3$),
283: $(CH_3)_3CSi$(n-$C_3H_7$) (O-s-$C_4H_9$) ($OCH_3$),
284: $(CH_3)_3CSi$(n-$C_3H_7$) (O-t-$C_4H_9$) ($OCH_3$),
285: $(CH_3)_3CSi$(n-$C_3H_7$) (O-n-$C_5H_{11}$) ($OCH_3$),
286: $(CH_3)_3CSi$(i-$C_3H_7$) ($OC_2H_5$) ($OCH_3$),
287: $(CH_3)_3CSi$(i-$C_3H_7$) (O-n-$C_3H_7$) ($OCH_3$),
288: $(CH_3)_3CSi$(i-$C_3H_7$) (O-n-$C_4H_9$) ($OCH_3$),
289: $(CH_3)_3CSi$(s-$C_4H_9$) ($OC_2H_5$) ($OCH_3$),
290: $(CH_3)_3CSi$(s-$C_4H_9$) (O-n-$C_3H_7$) ($OCH_3$),
291: $(CH_3)_3CSi$(s-$C_4H_9$) (O-n-$C_4H_9$) ($OCH_3$),
292: $(CH_3)_3CSi$(t-$C_4H_9$) ($OC_2H_5$) ($OCH_3$),
293: $(CH_3)_3CSi$(t-$C_4H_9$) (O-n-$C_3H_7$) ($OCH_3$),
294: $(CH_3)_3CSi$(t-$C_4H_9$) (O-n-$C_4H_9$) ($OCH_3$),
295: $(CH_3)$ $(C_2H_5)_2CSi(CH_3)$ ($OC_2H_5$) ($OCH_3$),
296: $(CH_3)$ $(C_2H_5)_2CSi(CH_3)$ (O-n-$C_3H_7$) $OCH_3$),
297: $(CH_3)$ $(C_2H_5)_2CSi(CH_3)$ (O-n-$C_4H_9$) ($OCH_3$),
298: $(C_2H_5)_3CSi(CH_3)(OC_2H_5)$ ($OCH_3$),
299: $(C_2H_5)_3CSi(CH_3)$ (O-n-$C_3H_7$) ($OCH_3$),
300: $(C_2H_5)_3CSi(CH_3)$ (O-n-$C_4H_9$) ($OCH_3$),
301: $HC(CH_3)_2C(CH_3)_2Si(CH_3)$ ($OC_2H_5$) ($OCH_3$),
302: $HC(CH_3)_2C(CH_3)_2Si(CH_3)$ (O-n-$C_3H_7$) ($OCH_3$),
303: $HC(CH_3)_2C(CH_3)_2Si(CH_3)$ (O-n-$C_4H_9$) ($OCH_3$),
304: (c-$C_5H_9$)$_2$Si($OC_2H_5$) ($OCH_3$),
305: (c-$C_5H_9$)$_2$Si(O-n-$C_3H_7$) ($OCH_3$),
306: (c-$C_5H_9$)$_2$Si(O-n-$C_4H_9$) ($OCH_3$),
307: (n-$C_5H_{11}$)$_2$Si($OC_2H_5$) ($OCH_3$),
308: (n-$C_5H_{11}$)$_2$Si(O-n-$C_3H_7$) ($OCH_3$),
309: (n-$C_5H_{11}$)$_2$Si(O-n-$C_4H_9$) ($OCH_3$),
310: (c-$C_5H_9$)Si(n-$C_3H_7$) ($OC_2H_5$) ($OCH_3$),
311: (c-$C_5H_9$)Si(n-$C_3H_7$) (O-n-$C_3H_7$) ($OCH_3$),
312: (c-$C_5H_9$)Si(n-$C_3H_7$) (O-n-$C_4H_9$) ($OCH_3$),
313: (c-$C_5H_9$)Si(i-$C_3H_7$) ($OC_2H_5$) ($OCH_3$),
314: (c-$C_5H_9$)Si(i-$C_3H_7$) (O-n-$C_3H_7$) ($OCH_3$),
315: (c-$C_5H_9$)Si(i-$C_3H_7$) (O-n-$C_4H_9$) ($OCH_3$),
316: (c-$C_5H_{11}$)Si(c-$C_5H_9$) ($OC_2H_5$) ($OCH_3$),
317: (c-$C_5H_{11}$)Si(c-$C_5H_9$) (O-n-$C_3H_7$) ($OCH_3$),
318: (c-$C_5H_{11}$)Si(c-$C_5H_9$) (O-n-$C_4H_9$) ($OCH_3$),
319: $(CH_3)_3CSi$(O-n-$C_5H_{11}$) ($OC_2H_5$) ($OCH_3$),
320: $(CH_3)_3CSi$(O-n-$C_5H_{11}$) (O-n-$C_3H_7$) ($OCH_3$),

321: $(CH_3)_3CSi(O\text{-}n\text{-}C_5H_{11})\ (O\text{-}n\text{-}C_4H_9)\ (OCH_3)$,
322: $(CH_3)_3CSi(CH_3)\ (OCH_3)_2$,
323: $(CH_3)_3CSi(CH(CH_3)_2)\ (OCH_3)_2$,
324: $(CH_3)_3CSi(C_2H_5)\ (OCH_3)_2$,
325: $(CH_3)_3CSi(n\text{-}C_3H_7)\ (OCH_3)_2$,
326: $(CH_3)_3CSi(n\text{-}C_6H_{13})\ (OCH_3)_2$,
327: $(C_2H_5)_3CSi(CH_3)\ (OCH_3)_2$,
328: $(CH_3)\ (C_2H_5)CHSi(CH_3)\ (OCH_3)_2$,
329: $((CH_3)_2CHCH_2)_2Si(OCH_3)_2$,
330: $(C_2H_5)\ (CH_3)_2CSi(CH_3)\ (OCH_3)_2$,
331: $(CH_3)_3CSi(OCH_3)_3$,
332: $(CH_3)\ (C_2H_5)CHSi(OCH_3)_3$,
333: $(CH_3)_2Ch(CH_3)_2CSi(CH_3)\ (OCH_3)_2$,
334: $((CH_3)_3C)_2Si(OCH_3)_2$,
335: $(C_2H_5)\ (CH_3)_2CSi(OCH_3)_3$,
336: $(CH_3)_3CSi(OCH(CH_3)_2)\ (OCH_3)_2$,
337: $(CH_3)_3CSi(OC(CH_3)_3)\ (OCH_3)_2$,
338: $((CH_3)_2CH)_2Si(OCH_3)_2$,
339: $(c\text{-}C_5H_9)_2Si(OCH_3)_2$,
340: $(c\text{-}C_5H_9)\ (CH_3)Si(OCH_3)_2$,
341: $(c\text{-}C_5H_9)\ ((CH_3)_2CHCH_2)Si(OCH_3)_2$,
342: $(c\text{-}C_6H_{11})Si\ (CH_3)(OCH_3)_2$,
343: $(c\text{-}C_6H_{11})_2Si(OCH_3)_2$,
344: $(c\text{-}C_6H_{11})\ ((CH_3)_2CHCH_2)Si\ (OCH_3)_2$,
345: $((CH_3)_2CHCH_2)\ ((C_2H_5)\ (CH_3)CH)Si(OCH_3)_2$,
346: $HC(CH_3)_2C(CH_3)_2Si(CH_3)\ (OCH_3)_2$,
347: $HC(CH_3)_2C(CH_3)_2Si(OCH_3)_3$,
348:

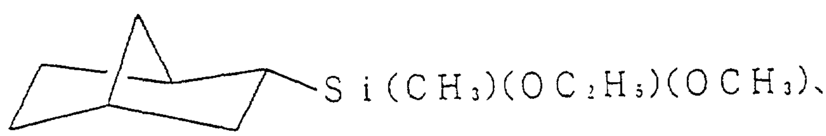

349:

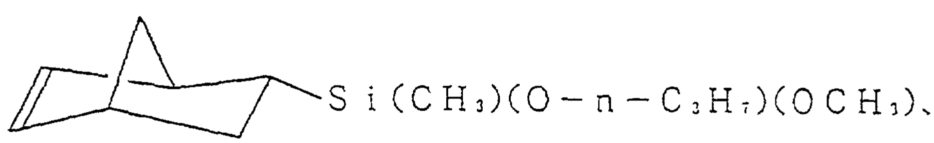

350:

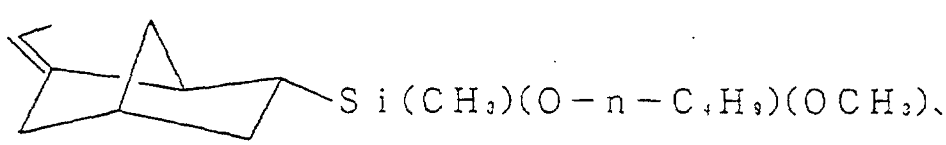

351:

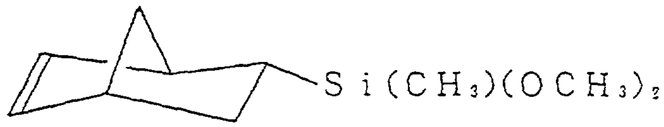 、

352:

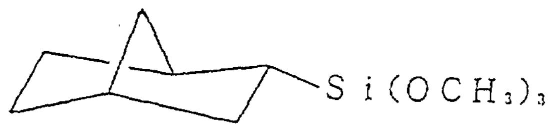 、

353:

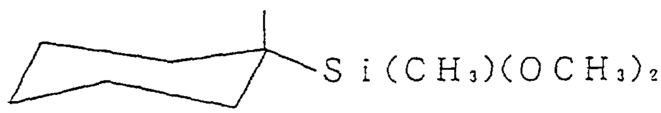 、

354:

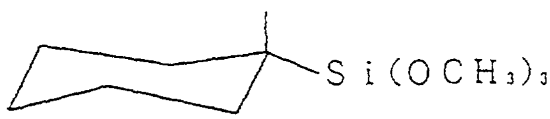 、

355:

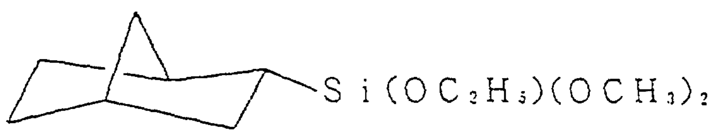 、

356:

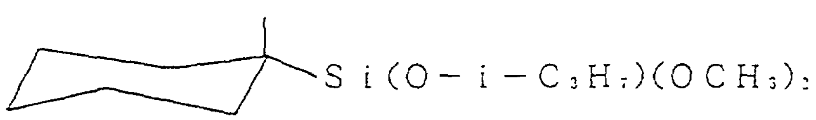 、

357:

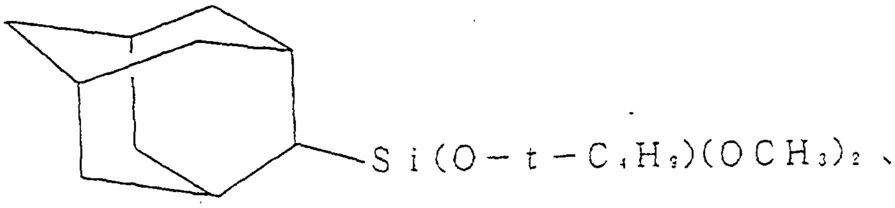

358: $(CH_3)_3CSi(N(C_2H_5)_2)(OCH_3)_2$,
359: $(CH_3)_3CSi(N(C_2H_5)_2)(OC_2H_5)(OCH_3)$,
360: $(CH_3)_3CSi(N(C_2H_5)_2)(O\text{-}n\text{-}C_3H_7)(OCH_3)$,
361: $(CH_3)_3CSi(N(C_2H_5)_2)(O\text{-}n\text{-}C_4H_9)(OCH_3)$,
362: $(CH_3)_3CSi(OSi(CH_3)_3)(OC_2H_5)(OCH_3)$,
363: $(CH_3)_3CSi(OSi(CH_3)_3)(O\text{-}n\text{-}C_3H_7)(OCH_3)$,
364: $(CH_3)_3CSi(OSi(CH_3)_3)(O\text{-}n\text{-}C_4H_9)(OCH_3)$, and
365: $(CH_3)_3CSi(OSi(CH_3)_3)(OCH_3)_2$.

Specific examples of the silicon compound when a hydrocarbon group having at least 2 carbon atoms is used as $R^6$ include:

366: $(CH_3)_3CSi(CH_3)(OC_2H_5)_2$,
367: $(CH_3)_3CSi(CH_3)(O\text{-}n\text{-}C_3H_7)_2$,
368: $(CH_3)_3CSi(CH_3)(O\text{-}i\text{-}C_3H_7)_2$,
369: $(CH_3)_3CSi(CH_3)(O\text{-}n\text{-}C_4H_9)_2$,
370: $(CH_3)_3CSi(CH_3)(O\text{-}i\text{-}C_4H_9)_2$,
371: $(CH_3)_3CSi(CH_3)(O\text{-}t\text{-}C_4H_9)_2$,
372: $(CH_3)_3CSi(CH_3)(O\text{-}n\text{-}C_6H_{13})_2$,
373: $(CH_3)_3CSi(CH_3)(O\text{-}n\text{-}C_8H_{17})_2$,
374: $(CH_3)_3CSi(CH_3)(O\text{-}n\text{-}C_{10}H_{21})_2$,
375: $(CH_3)_3CSi(C_2H_5)(OC_2H_5)_2$,
376: $(CH_3)_3CSi(n\text{-}C_3H_7)(OC_2H_5)_2$,
377: $(CH_3)_3CSi(i\text{-}C_3H_7)(OC_2H_5)_2$,
378: $(CH_3)_3CSi(n\text{-}C_4H_9)(OC_2H_5)_2$,
379: $(CH_3)_3CSi(i\text{-}C_4H_9)(OC_2H_5)_2$,
380: $(CH_3)_3CSi(s\text{-}C_4H_9)(OC_2H_5)_2$,
381: $(CH_3)_3CSi(t\text{-}C_4H_9)(OC_2H_5)_2$,
382: $(CH_3)_3CSi(n\text{-}C_5H_{11})(OC_2H_5)_2$,
383: $(CH_3)_3CSi(C\text{-}C_5H_9)(OC_2H_5)_2$,
384: $(CH_3)_3CSi(n\text{-}C_6H_{13})(OC_2H_5)_2$,
385: $(CH_3)_3CSi(c\text{-}C_6H_{11})(OC_2H_5)_2$,
386: $(CH_3)_3CSi(C_2H_5)(O\text{-}n\text{-}C_3H_7)_2$,
387: $(CH_3)_3CSi(C_2H_5)(O\text{-}i\text{-}C_3H_7)_2$,
388: $(CH_3)_3CSi(C_2H_5)(O\text{-}n\text{-}C_4H_9)_2$,
389: $(CH_3)_3CSi(C_2H_5)(O\text{-}i\text{-}C_4H_9)_2$,
390: $(CH_3)_3CSi(C_2H_5)(O\text{-}s\text{-}C_4H_9)_2$,
391: $(CH_3)_3CSi(C_2H_5)(O\text{-}t\text{-}C_4H_9)_2$,
392: $(CH_3)_3CSi(C_2H_5)(O\text{-}n\text{-}C_6H_{13})_2$,
393: $(CH_3)_3CSi(C_2H_5)(O\text{-}n\text{-}C_8H_{17})_2$,
394: $(CH_3)_3CSi(C_2H_5)(O\text{-}n\text{-}C_{10}H_{21})_2$,
395: $(CH_3)_3CSi(i\text{-}C_3H_7)(O\text{-}n\text{-}C_3H_7)_2$,
396: $(CH_3)_3CSi(i\text{-}C_3H_7)(O\text{-}i\text{-}C_3H_7)_2$,
397: $(CH_3)_3CSi(i\text{-}C_3H_7)(O\text{-}n\text{-}C_4H_9)_2$,
398: $(CH_3)_3CSi(i\text{-}C_3H_7)(O\text{-}i\text{-}C_4H_9)_2$,
399: $(CH_3)_3CSi(i\text{-}C_3H_7)(O\text{-}s\text{-}C_4H_9)_2$,
400: $(CH_3)_3CSi(i\text{-}C_3H_7)(O\text{-}t\text{-}C_4H_9)_2$,
401: $(CH_3)_3CSi(i\text{-}C_3H_7)(O\text{-}n\text{-}C_6H_{13})_2$,
402: $(CH_3)_3CSi(i\text{-}C_3H_7)(O\text{-}n\text{-}C_8H_{17})_2$,
403: $(CH_3)_3CSi(i\text{-}C_3H_7)(O\text{-}n\text{-}C_{10}H_{21})_2$,

404: $(CH_3)_3CSi(O\text{-}n\text{-}C_3H_7)(OC_2H_5)_2$,
405: $(CH_3)_3CSi(O\text{-}i\text{-}C_3H_7)(OC_2H_5)_2$,
406: $(CH_3)_3CSi(O\text{-}n\text{-}C_4H_9)(OC_2H_5)_2$,
407: $(CH_3)_3CSi(O\text{-}i\text{-}C_4H_9)(OC_2H_5)_2$,
408: $(CH_3)_3CSi(O\text{-}s\text{-}C_4H_9)(OC_2H_5)_2$,
409: $(CH_3)_3CSi(O\text{-}t\text{-}C_4H_9)(OC_2H_5)_2$,
410: $(CH_3)_3CSi(O\text{-}n\text{-}C_5H_{11})(OC_2H_5)_2$,
411: $(CH_3)_3CSi(O\text{-}c\text{-}C_5H_9)(OC_2H_5)_2$,
412: $(CH_3)_3CSi(O\text{-}n\text{-}C_6H_{13})(OC_2H_5)_2$,
413: $(CH_3)_3CSi(O\text{-}c\text{-}C_6H_{11})(OC_2H_5)_2$,
414: $(i\text{-}C_3H_7)_2Si(OC_2H_5)_2$,
415: $(i\text{-}C_4H_9)_2Si(OC_2H_5)_2$,
416: $(S\text{-}C_4H_9)_2Si(OC_2H_5)_2$,
417: $(neo\text{-}C_5H_{11})_2Si(OC_2H_5)_2$,
418: $(c\text{-}C_5H_9)_2Si(OC_2H_5)_2$,
419: $(c\text{-}C_5H_9)_2Si(O\text{-}n\text{-}C_3H_7)_2$,
420: $(c\text{-}C_5H_9)_2Si(O\text{-}n\text{-}C_4H_9)_2$,
421: $(c\text{-}C_5H_9)_2Si(O\text{-}n\text{-}C_5H_{11})_2$,
422: $(c\text{-}C_5H_9)_2Si(O\text{-}n\text{-}C_8H_{17})_2$,
423: $(c\text{-}C_6H_{11})_2Si(OC_2H_5)_2$,
424: $(c\text{-}C_6H_{11})_2Si(O\text{-}n\text{-}C_3H_7)_2$,
425: $(c\text{-}C_6H_{11})_2Si(O\text{-}n\text{-}C_4H_9)_2$,
426: $(c\text{-}C_6H_{11})_2Si(O\text{-}n\text{-}C_5H_{11})_2$,
427: $(c\text{-}C_6H_{11})_2Si(O\text{-}n\text{-}C_8H_{17})_2$,
428: $(c\text{-}C_6H_{11})Si(CH_3)(OC_2H_5)_2$,
429: $(c\text{-}C_6H_{11})Si(CH_3)(O\text{-}n\text{-}C_3H_7)_2$,
430: $(c\text{-}C_6H_{11})Si(CH_3)(O\text{-}n\text{-}C_4H_9)_2$,
431: $(c\text{-}C_6H_{11})Si(CH_3)(O\text{-}n\text{-}C_5H_{11})_2$,
432: $(c\text{-}C_6H_{11})Si(CH_3)(O\text{-}n\text{-}C_8H_{17})_2$,
433: $(c\text{-}C_6H_{11})Si(C_2H_5)(OC_2H_5)_2$,
434: $(c\text{-}C_6H_{11})Si(n\text{-}C_4H_9)(OC_2H_5)_2$,
435: $(c\text{-}C_6H_{11})Si(c\text{-}C_5H_9)(OC_2H_5)_2$,
436: $(C_2H_5)_3CSi(CH_3)(OC_2H_5)_2$,
437: $(C_2H_5)_3CSi(CH_3)(O\text{-}n\text{-}C_3H_7)_2$,
438: $(C_2H_5)_3CSi(CH_3)(O\text{-}i\text{-}C_3H_7)_2$,
439: $(C_2H_5)_3CSi(CH_3)(O\text{-}n\text{-}C_4H_9)_2$,
440: $(C_2H_5)_3CSi(CH_3)(O\text{-}i\text{-}C_4H_9)_2$,
441: $(C_2H_5)_3CSi(CH_3)(O\text{-}t\text{-}C_4H_9)_2$,
442: $(C_2H_5)_3CSi(CH_3)(O\text{-}n\text{-}C_6H_{13})_2$,
443: $(C_2H_5)_3CSi(CH_3)(O\text{-}n\text{-}C_8H_{17})_2$,
444: $(C_2H_5)_3CSi(CH_3)(O\text{-}n\text{-}C_{10}H_{21})_2$,
445: $(C_2H_5)_3CSi(C_2H_5)(OC_2H_5)_2$,
446: $(C_2H_5)_3CSi(n\text{-}C_3H_7)(OC_2H_5)_2$,
447: $(C_2H_5)_3CSi(i\text{-}C_3H_7)(OC_2H_5)_2$,
448: $(C_2H_5)_3CSi(n\text{-}C_4H_9)(OC_2H_5)_2$,
449: $(C_2H_5)_3CSi(i\text{-}C_4H_9)(OC_2H_5)_2$,
450: $(C_2H_5)_3CSi(s\text{-}C_4H_9)(OC_2H_5)_2$,
451: $(C_2H_5)_3CSi(t\text{-}C_4H_9)(OC_2H_5)_2$,
452: $(C_2H_5)_3CSi(n\text{-}C_5H_{11})(OC_2H_5)_2$,
453: $(C_2H_5)_3CSi(c\text{-}C_5H_{11})(OC_2H_5)_2$,
454: $(C_2H_5)_3CSi(n\text{-}C_6H_{13})(OC_2H_5)_2$,
455: $(C_2H_5)_3CSi(c\text{-}C_6H_{11})(OC_2H_5)_2$,
456: $H(CH_3)_2C(CH_3)_2CSi(CH_3)(OC_2H_5)_2$,
457: $H(CH_3)_2C(CH_3)_2CSi(C_2H_5)(OC_2H_5)_2$,
458: $H(CH_3)_2C(CH_3)_2CSi(n\text{-}C_3H_7)(OC_2H_5)_2$,
459: $H(CH_3)_2C(CH_3)_2CSi(i\text{-}C_3H_7)(OC_2H_5)_2$,
460: $H(CH_3)_2C(CH_3)_2CSi(n\text{-}C_4H_9)(OC_2H_5)_2$,
461: $H(CH_3)_2C(CH_3)_2CSi(O\text{-}n\text{-}C_3H_7)_2$,

462: $H(CH_3)_2C(CH_3)_2CSi(CH_3)$ $(O\text{-}i\text{-}C_3H_7)_2$,
463: $H(CH_3)_2C(CH_3)_2CSi(CH_3)$ $(O\text{-}n\text{-}C_4H_9)_2$,
464: $H(CH_3)_2C(CH_3)_2CSi(C_2H_5)$ $(O\text{-}n\text{-}C_3H_7)_2$,
465: $(CH_3)_2(C_2H_5)CSi(CH_3)$ $(OC_2H_5)_2$,
466: $(CH_3)_2(C_2H_5)CSi(CH_3)$ $(O\text{-}n\text{-}C_3H_7)_2$,
467: $(CH_3)_2(C_2H_5)CSi(CH_3)$ $(O\text{-}n\text{-}C_4H_9)_2$,
468: $(CH_3)_2(C_2H_5)CSi(C_2H_5)$ $(O\text{-}n\text{-}C_4H_9)_2$,
469: $(CH_3)_2CSi(OC_2H_5)_3$,
470: $(CH_3)_2CSi(O\text{-}n\text{-}C_3H_7)_3$,
471: $(CH_3)_2CSi(O\text{-}i\text{-}C_3H_7)_3$,
472: $(CH_3)_2CSi(O\text{-}n\text{-}C_4H_9)_3$,
473: $(CH_3)_2CSi(O\text{-}i\text{-}C_4H_9)_3$,
474: $(CH_3)_2CSi(O\text{-}t\text{-}C_4H_9)_3$,
475: $(CH_3)_2CSi(O\text{-}n\text{-}C_6H_{13})_3$,
476: $(CH_3)_2CSi(O\text{-}n\text{-}C_8H_{17})_3$,
477: $(CH_3)_2CSi(O\text{-}n\text{-}C_{10}H_{21})_3$,
478: $(CH_3)_2(C_2H_5)CSi(OC_2H_5)_3$,
479: $(CH_3)_2(C_2H_5)CSi(O\text{-}n\text{-}C_3H_7)_3$,
480: $(CH_3)_2(C_2H_5)CSi(O\text{-}i\text{-}C_3H_7)_3$,
481: $(CH_3)_2(C_2H_5)CSi(O\text{-}n\text{-}C_4H_9)_3$,
482: $(CH_3)_2(C_2H_5)CSi(O\text{-}i\text{-}C_4H_9)_3$,
483: $(CH_3)_2(C_2H_5)CSi(O\text{-}t\text{-}C_4H_9)_3$,
484: $(CH_3)_2(C_2H_5)CSi(O\text{-}n\text{-}C_6H_{13})_3$,
485: $(CH_3)_2(C_2H_5)CSi(O\text{-}n\text{-}C_8H_{17})_3$,
486: $(CH_3)_2(C_2H_5)CSi(O\text{-}n\text{-}C_{10}H_{21})_3$,
487: $(CH_3)(C_2H_5)_2CSi(OC_2H_5)_3$,
488: $(CH_3)(C_2H_5)_2CSi(O\text{-}n\text{-}C_3H_7)_3$,
489: $(CH_3)$ $(C_2H_5)_2CSi(O\text{-}i\text{-}C_3H_7)_3$,
490: $(CH_3)$ $(C_2H_5)_2CSi(O\text{-}n\text{-}C_4H_9)_3$,
491: $(CH_3)$ $(C_2H_5)_2CSi(O\text{-}i\text{-}C_4H_9)_3$,
492: $(CH_3)$ $(C_2H_5)_2CSi(O\text{-}t\text{-}C_4H_9)_3$,
493: $(CH_3)$ $(C_2H_5)_2CSi(O\text{-}n\text{-}C_6H_{13})_3$,
494: $(CH_3)$ $(C_2H_5)_2CSi(O\text{-}n\text{-}C_8H_{17})_3$,
495: $(CH_3)$ $(C_2H_5)_2CSi(O\text{-}n\text{-}C_{10}H_{21})_3$,
496: $H(CH_3)_2C(CH_3)_2CSi(OC_2H_5)_3$,
497:$H(CH_3)_2C(CH_3)_2CSi(O\text{-}n\text{-}C_3H_7)_3$,
498: $H(CH_3)_2C(CH_3)_2CSi(O\text{-}i\text{-}C_3H_7)_3$,
499: $H(CH_3)_2C(CH_3)_2CSi(O\text{-}n\text{-}C_4H_9)_3$,
500: $H(CH_3)_2C(CH_3)_2CSi(O\text{-}i\text{-}C_4H_9)_3$,
501: $H(CH_3)_2C(CH_3)_2CSi(O\text{-}t\text{-}C_4H_9)_3$,
502: $H(CH_3)_2C(CH_3)_2CSi(O\text{-}n\text{-}C_6H_{13})_3$,
503: $H(CH_3)_2C(CH_3)_2CSi(O\text{-}n\text{-}C_8H_{17})_3$,
504: $H(CH_3)_2C(CH_3)_2CSi(O\text{-}n\text{-}C_{10}H_{21})_3$,
505: $(CH_3)_3CSi(CH_3)$ $(OC_2H_5)$ $(O\text{-}n\text{-}C_3H_7)$,
506: $(CH_3)_3CSi(CH_3)$ $(OC_2H_5)$ $(O\text{-}n\text{-}C_4H_9)$,
507: $(CH_3)_3CSi(CH_3)$ $(OC_2H_5)$ $(O\text{-}n\text{-}C_8H_{17})$,
508: $(c\text{-}C_5H_9)_2Si(OC_2H_5)_2$,
509: $((CH_3)_2CHCH_2)$ $((CH_3)_2CH)Si(O\text{-}n\text{-}C_5H_{11})_2$,
510:

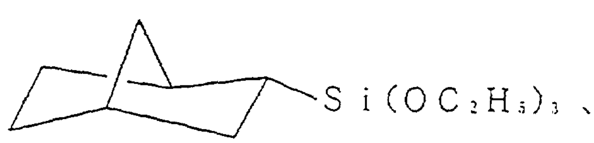

511:

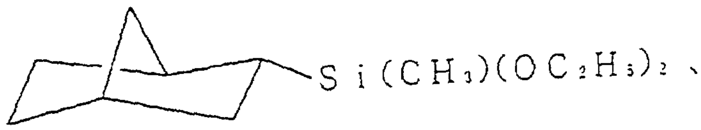

512:

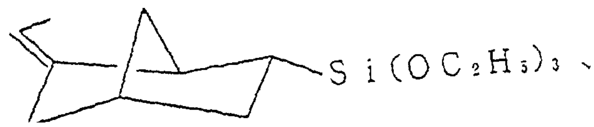

513:

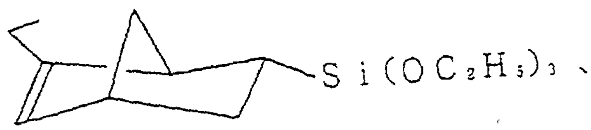

514:

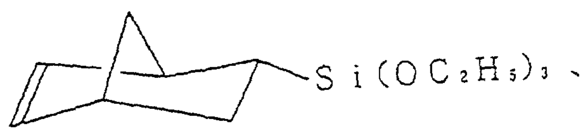

515:

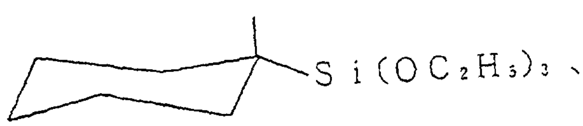

516:

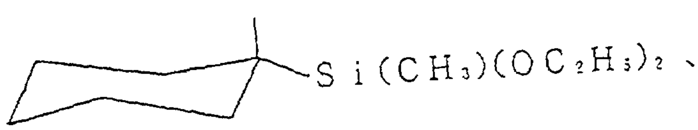

517:

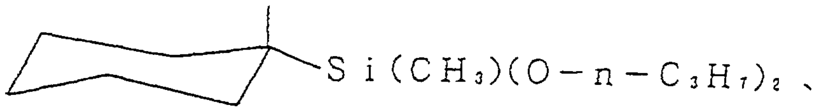

518:

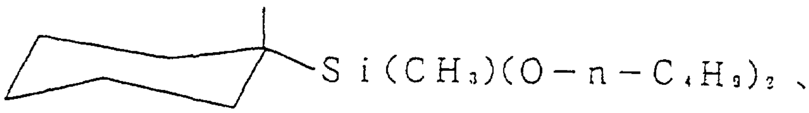

519:

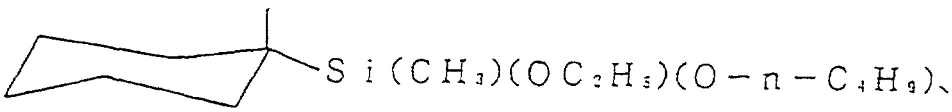

520;

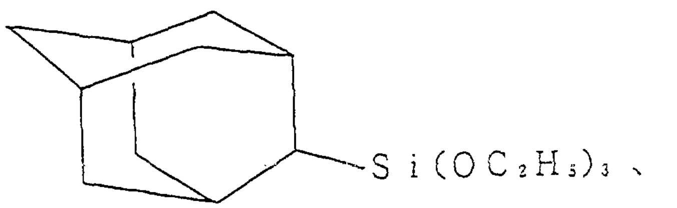

521: $(CH_3)_3CSi(N(C_2H_5)_2)\ (OC_2H_5)_2$, and
522: $(CH_3)_3CSi(OSi(CH_3)_3)\ (OC_2H_5)_2$

<α-olefin polymerization>

An α-olefin to be provided for polymerization in the catalyst system of the present invention is a propylene-containing α-olefin. The term "propylene-containing α-olefin" means not only a single substance of propylene but also a mixture of propylene with another α-olefin. The propylene-containing α-olefin is desired to contain at least 50 mole%, preferably at least 70 mole% of propylene.

The α-olefin is represented by the following formula [II]:

$$\text{Formula [II] :} \qquad R^{15}CH = CH_2$$

(wherein, $R^{15}$ represents a $C_{1-20}$ hydrocarbon group which may have a branched group).

Specific examples of the α-olefin include propylene, butene-1, pentene-1 and hexene-1,4-methylpentene-l.

In addition to the above-exemplified α-olefins, a copolymer obtained by copolymerization of an α-olefin and a monomer copolymerizable therewith (ex. ethylene, diene or styrene) can be used. Such a copolymerizable monomer can be used in an amount up to 15 wt.% in random copolymerization and up to 50 wt.% in block copolymerization.

No particular limitation is imposed on the polymerization method to be employed in the present invention, but employed is slurry polymerization in a hydrocarbon solvent, bulk polymerization in a liquid monomer or gas polymerization which uses a monomer to be reacted in the gas phase. Of these, gas polymerization is preferred. For polymerization, any one of continuous polymerization, semi-batch polymerization and batch polymerization may be adopted. Moreover, multi-stage polymerization may be effected in series or multi-tank polymerization may be effected in parallel. Hydrogen can be used as a molecular weight adjusting agent. Prior to polymerization, the catalyst components may be brought into contact each other under an inert gas atmosphere or under an olefin atmosphere.

Polymerization temperature is at least 92°C, preferably at least 95°C. The upper limit of the polymerization temperature is 200°C. Preferred polymerization temperature is 95 to 150°C, particularly 100 to 130°C.

In the present invention, polymerization is conducted in such a way that a (hydrogen/α-olefin) ratio and MFR of the polymer to be formed will fall within a range satisfying the relationship represented by the following formula [I]:

Formula [I]:

$$\text{Log (MFR)} \geq 1.5 \text{ x log (hydrogen/}\alpha\text{-olefin)} + 4.5$$

The (hydrogen/α-olefin) ratio is preferably adjusted in such a way that the (hydrogen/α-olefin) ratio and MFR of the polymer to be formed will fall within a range satisfying the relationship represented by the following formula [I-a]:

Formula [I-a]:

$$\text{Log (MFR)} \geq 1.5 \text{ x log (hydrogen/}\alpha\text{-olefin)} + 5.0$$

The (hydrogen/α-olefin) ratio is more preferably adjusted in such a way that the (hydrogen/α-olefin) ratio and MFR of the polymer to be formed will fall within a range satisfying the relationship represented by the following formula [I-b]:

Formula [I-b]:

$$\text{Log (MFR)} \geq 1.5 \text{ x log (hydrogen/}\alpha\text{-olefin)} + 5.5$$

The term "(hydrogen/α-olefin) ratio" as used herein means a (hydrogen/α-olefin) ratio under the atmosphere in the presence of a catalyst. Described specifically, it means a (hydrogen/α-olefin) ratio in a polymerization solvent in the slurry process, a (hydrogen/α-olefin) ratio in a liquid monomer in the bulk polymerization and a (hydrogen/α-olefin) ratio in the gas phase in the gas phase polymerization. The (hydrogen/α-olefin) ratio is a molar ratio.

At a ratio outside the above-described range, ME improving effects are not sufficient.

Examples of the inert hydrocarbon polymerization catalyst to be used for slurry polymerization include aliphatic hydrocarbons such as propane, butane, pentane, hexane, heptane, octane, decane, dodecane and kerosene, alicyclic hydrocarbons such as cyclopentane, cyclohexane and methylcyclopentane; hydrocarbon halides such as ethylene chloride and chlorobenzene; and aromatic hydrocarbons such as benzene, toluene and xylene; and mixtures thereof. Of these, aliphatic hydrocarbons are preferred.

In the liquid monomer, polymerization is conducted under pressure permitting liquefaction of the monomer, but complete liquefaction is not necessary. For example, an amount of the monomer up to 50 wt.% may be vaporized in the liquid monomer. As a reactor, tank type and loop type one may be used.

Gas phase polymerization is usually conducted under the conditions wherein a monomer to be reacted is in the gas phase, but it is not necessarily in the complete gas phase. The monomer may be liquefied in an amount up to 50 wt.%. Hydrocarbons other than the reaction monomer,'for example, propane, ethane, butane, isopentane or hexane may be contained. Examples of the reactor to be used in this invention include a vertical agitation type reactor, horizontal agitation type reactor and a fluidized bed reactor. The typical fluidized bed reactor will next be described.

The bed is ordinarily made of a concentric granular resin to be formed by the reactor. During polymerization, the bed is formed by polymer particles thus formed, and a polymerizable and modifying gas component to be introduced at a flow rate sufficient of causing growing polymer particles and catalyst particles to separate and to act as a fluid. The fluidizing gas comprises a raw material, makeup raw material, cycling (recycling) gas, that is, monomer and if necessary, a modifier and/or inert carrier gas.

The reaction system essentially has a reactor, bed, gas dispersing plate, inlet and outlet piping, compressor, cycle gas cooler and product discharging system. The container has a rate decreasing area above the bed and a reaction area in the bed. These areas both exist above the gas dispersing liquid.

<Examples>

The present invention will hereinafter be described more specifically by examples. It should however be borne in mind that the present invention is not limited to or by them.

Measuring method of each of the physical properties and apparatus used therefor in the present invention will next be described.

[MFR]

Apparatus: "Melt Indexer", product of TAKARA KOGYO Co., LTD.
Method: in accordance with JIS-K6758

[ME]

Apparatus: "Melt Indexer" product of TAKARA KOGYO Co., LTD.
Method: A polymer is extruded through an orifice having a diameter of 1.0 mm and length of 8.0 mm at 190°C under load. The polymer extruded from the orifice is charged in methanol when the extruding rate is at 0.1 g/min and quenched. The diameter of the resulting strand/orifice diameter at this time is calculated. This value serves as a measure of the non-Newtonian property of the resin. The greater the value, the larger the molecular weight distribution, showing good tendency in molding property.

[Appearance of molded or formed product]

A polymer is molded in a sheet-like mold (350 x 100 x 2.5 mm) by using an in-line screw type injection molding machine. The presence or absence and extent of the flow mark (wavy flow pattern) and sink mark (fine concave portion on the surface) on the surface of the molded polymer are visually observed. The appearance is evaluated based on the below-described standards.

A: Markedly good appearance suited for practical use, because neither flow mark nor sink mark is recognized at all or either one is recognized slightly.
B: No problem in practical use, though either one of flow mark or sink mark is recognized partially.
C: Although either one of flow mark or sink mark exists partially, it is marked and causes a problem in practical use.
D: Either one or both of flow mark and sink mark is observed clearly in a wide area and prevents practical use.

[Flexural modulus]

Measured in accordance with JIS-K7203.

Example-1

[Preparation of Component (A)]

In a sufficiently nitrogen-purged flask, 200 ml of dehydrated and deoxygenated n-heptane was introduced, followed by the introduction of 0.4 mole of $MgCl_2$ and 0.8 mole of $Ti(O\text{-}n\text{-}C_4H_9)_4$. The mixture was reacted at 95°C for 2 hours. After completion of the reaction, the temperature was decreased to 40°C. To the reaction mixture, 48 ml of methylhydropolysiloxane (having a viscosity of 20 centistokes) was introduced and they were reacted for 3 hours. The solid component thus formed was washed with n-heptane.

In a sufficiently nitrogen-purged flask, 50 ml of n-heptane, which had been purified as described above, was introduced, followed by the introduction of 0.24 mole, in terms of Mg atom, of the solid content which had been synthesized above. With 25 ml of n-heptane, 0.4 mole of $SiCl_4$ was mixed at 30°C for 30 minutes. The mixture was then introduced into the flask, in which reaction was conducted at 70°C for 3 hours. After completion of the reaction, the reaction mixture was washed with n-heptane. With 25 ml of n-heptane, 0.024 mole of phthaloyldichloride was mixed at 70°C for 30 minutes. The resulting mixture was introduced into the flask, in which the mixture was reacted at 90°C for 1 hour. After completion of the reaction, the mixture was washed with n-heptane and then, 10 ml of $SiCl_4$ was

introduced. The mixture was reacted at 80°C for 6 hours. After completion of the reaction, the mixture was washed sufficiently with n-heptane, whereby a solid component (Component (Al) for preparing Component (A) was obtained. The titanium content of the resulting product was 1.3 wt.%.

In a sufficiently nitrogen-purged flask, 50 ml of n-heptane purified as described above and then, 5 g of the solid content synthesized above were introduced. The resulting mixture was brought into contact with 1.2 ml of $(t\text{-}C_4H_9)Si(CH_3)(OCH_3)_2$ and 1.7 g of $Al(C_2H_5)_3$ at 30°C for 2 hours. After completion of the contact, the reaction mixture was washed sufficiently with n-heptane, whereby Component (A) mainly comprising magnesium chloride was obtained. Its titanium content was found to be 1.1 wt.%.

[Polymerization of propylene]

In a stirring type reactor whose reaction portion had a volume of 19 liter, the above-described catalyst component (A) and the organoaluminum component (B) shown in Table 1 were subjected to continuous homopolymerization of propylene. Polymerization conditions are shown in Table 1. Example-2

In a substantially similar manner to Example-1 except that polymerization temperature was changed from 105°C to 95°C and a hydrogen/propylene molar ratio was changed from 0.00039 to 0.0013, the polymerization of propylene was conducted.

Example-3

In a substantially similar manner to Example-1 except that the polymerization temperature was changed from 105 to 115°C, the polymerization of propylene was conducted.

Example-4

In a substantially similar manner to Example-3 except that triisobutyl aluminum was used instead of triethyl aluminum as an organoaluminum compound, the polymerization of propylene was conducted.

Comparative Example-1

In a substantially similar manner to Example-1 except that the polymerization temperature was changed to 85°C, polymerization was conducted.

Comparative Example-2

In a substantially similar manner to Example-1 except that the polymerization temperature was changed to 75°C, polymerization was conducted.

Table 1

| | | Ex. 1 | Ex. 2 | Ex. 3 | Ex. 4 | Comp. Ex. 1 | Comp. Ex. 2 |
|---|---|---|---|---|---|---|---|
| Polymerization conditions | Polymerization temperature °C | 105 | 95 | 115 | 115 | 85 | 75 |
| | Hydrogen/propylene Molar ratio | 0.00039 | 0.0013 | 0.00019 | 0.00027 | 0.0027 | 0.0030 |
| | Propylene pressure $Kg/cm^2 \cdot A$ | 22 | 22 | 22 | 22 | 22 | 22 |
| | Kind of organoaluminum | TEA | TEA | TEA | TIBA | TEA | TEA |
| | Amount of organoaluminum fed mg/hr | 40 | 40 | 40 | 60 | 40 | 40 |
| | Average production amount Kg/hr | 0.31 | 0.32 | 0.35 | 0.29 | 0.3 | 0.31 |
| | Average retention time hr | 3.23 | 3.13 | 2.86 | 3.45 | 3.33 | 3.23 |
| | Catalytic activity kg polymer / g catalyst | 28.2 | 25.2 | 16.8 | 19.5 | 30.0 | 22.0 |
| Physical properties | MFR g/10 min | 2.51 | 2.31 | 4.75 | 3.32 | 2.85 | 2.42 |
| | ME - | 1.50 | 1.47 | 1.47 | 1.48 | 1.40 | 1.39 |
| | Flexural modulus $kg/cm^2$ | 14500 | 14500 | 14600 | 14100 | 14600 | 14400 |
| | Appearance of molded or formed product | A | B | B | B | C | C |

TEA is the abbreviation of triethyl aluminum, while TIBA is that of triisobutyl aluminum.
From the results of Table 1, it is apparent that the products obtained under polymerization conditions of Examples 1 to 4 had an improved ME value, and from them, flow marks and/or sink marks which serve as the standards for evaluating the appearance of a molded or formed product are observed slightly and are therefore on the level not causing a problem in practical use.
In Comparative Examples 1 and 2, on the other hand, flow marks and sink marks, which are standards for evaluating the appearance of a molded or formed product, are so marked as to cause a problem in practical use.

**Industrial Applicability**

The present invention makes it possible to prepare α-olefin polymers having excellent molding property without impairing stereoregularity.

## Claims

1. A process for producing an α-olefin polymer comprising polymerizing a propylene-containing α-olefin in the presence of a Ziegler-Natta catalyst, wherein the polymerization is carried out at 92°C or greater and under a condition that a hydrogen/α-olefin (molar ratio) gas composition upon polymerization and a melt flow rate (MFR: g/10 min) of the α-olefin polymer as measured at 230°C under a load of 2.16 kg satisfy the following formula [I]:

Formula [I]:

$$\text{Log (MFR)} \geq 1.5 \times \log (\text{hydrogen}/\alpha\text{-olefin}) + 4.5.$$

2. A process for producing an α-olefin polymer as claimed in Claim 1, wherein the Ziegler-Natta catalyst contains the Components (A) and (B) below in combination:

    Component (A) : a solid catalyst component obtained by bringing the Components (A1) and (A2) below into contact:

    Component (A1): a solid component, for stereoregular polymerization of an α-olefin, which component contains titanium, magnesium and a halogen as essential components;
    Component (A2): a silicon compound component represented by the following formula [A]:

$$R^1R^2_{3-m}Si(OR^3)_m \qquad \text{Formula [A]}$$

    wherein $R^1$ represents a branched aliphatic hydrocarbon group or a cyclic aliphatic hydrocarbon group; $R^2$ represents a hydrocarbon group, which is the same as or different from $R^1$, or a hetero-containing hydrocarbon group; $R^3$ represents a hydrocarbon group; and m satisfies $1 \leq m \leq 3$;

    Component (B): an organoaluminum compound component.

3. A process for producing an α-olefin polymer as claimed in Claim 1, wherein the Ziegler-Natta catalyst contains the Components (A), (B) and (C) below in combination:

    Component (A): a solid component, for stereoregular polymerization of an α-olefin, which component contains titanium, magnesium and a halogen as essential components;
    Component (B): an organoaluminum compound component;
    Component (C): a silicon compound component represented by the following formula [C]:

$$R^4R^5_{3-m}Si(OR^6)_m \qquad \text{Formula [C]}$$

    wherein $R^4$ represents a branched aliphatic hydrocarbon group or a cyclic aliphatic hydrocarbon group; $R^5$

represents a hydrocarbon group, which is the same as or different from $R^4$, or a hetero-containing hydrocarbon group; $R^6$ represents a hydrocarbon group; and m satisfies $1 \leq m < 3$.

**4.** A process for producing an α-olefin polymer as claimed in Claim 1, wherein the Ziegler-Natta catalyst contains the Components (A), (B) and (C) below in combination:

Component (A): a solid component obtained by bringing the Components (A1) and (A2) below into contact:

Component (A1): a solid component, for stereoregular polymerization of an α-olefin, which component contains titanium, magnesium and a halogen as essential components;
Component (A2): Silicon compound component represented by the following formula [A]:

$$R^1R^2_{3-m}Si(OR^3)_m \qquad \text{Formula [A]}$$

wherein $R^1$ represents a branched aliphatic hydrocarbon group or a cyclic aliphatic hydrocarbon group; $R^2$ represents a hydrocarbon group, which is the same as or different from $R^1$, or a hetero-containing hydrocarbon group; $R^3$ represents a hydrocarbon group; and m satisfies $1 \leq m \leq 3$;

Component (B): Organoaluminum compound component;
Component (C): Silicon compound component represented by the following formula [C]:

$$R^4R^5_{3-m}Si(OR^6)_m \qquad \text{Formula [C]}$$

wherein $R^4$ represents a branched aliphatic hydrocarbon group or a cyclic aliphatic hydrocarbon group; $R^5$ represents a hydrocarbon group, which is the same as or different from $R^4$, or a hetero-containing hydrocarbon group; $R^6$ represents a hydrocarbon group; and m satisfies $1 \leq m \leq 3$.

**5.** A process for producing an α-olefin polymer as claimed in any one of claims 1 to 4, wherein the polymerization temperature is 95°C or greater.

**6.** A process for producing an α-olefin polymer as claimed in any one of claims 1 to 4, wherein the polymerization is gas phase polymerization.

FIG. 1

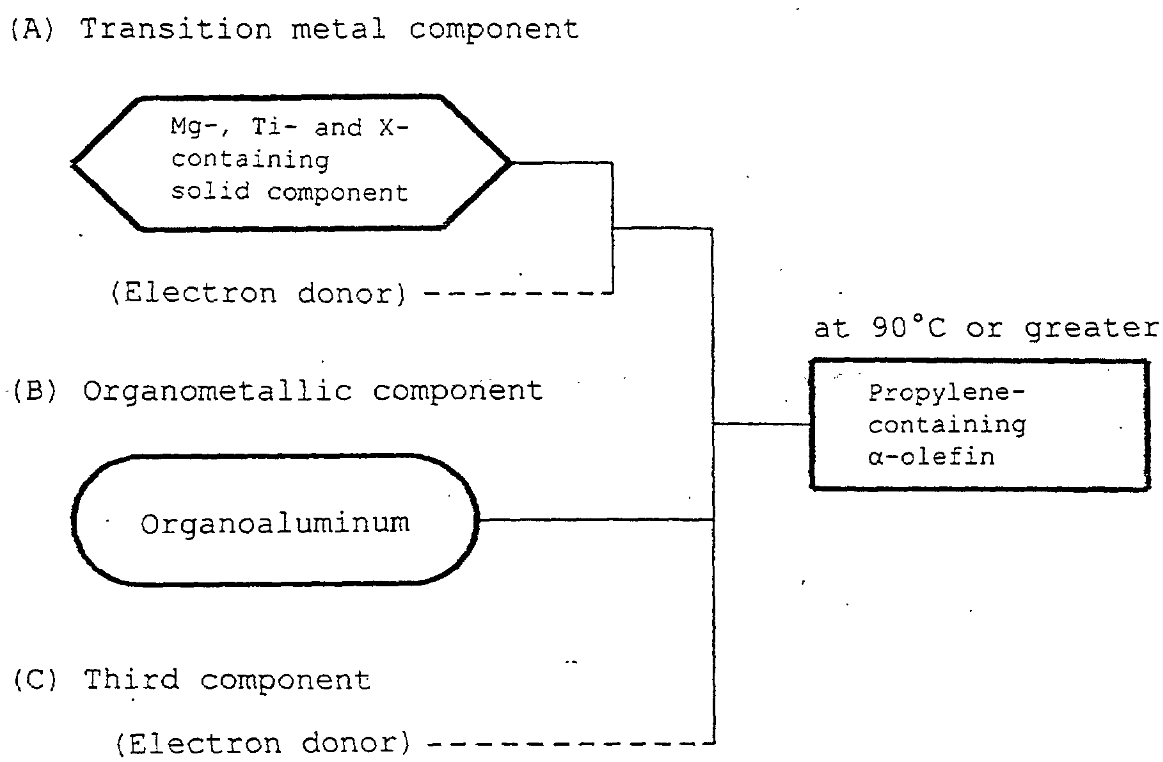
(A) Transition metal component
Mg-, Ti- and X-containing solid component
(Electron donor)
(B) Organometallic component
Organoaluminum
(C) Third component
(Electron donor)
at 90°C or greater
Propylene-containing α-olefin

## INTERNATIONAL SEARCH REPORT

International application No.
PCT/JP99/04867

A. CLASSIFICATION OF SUBJECT MATTER
Int.Cl[6] C08F10/00, C08F4/658, C08F4/654

According to International Patent Classification (IPC) or to both national classification and IPC

B. FIELDS SEARCHED

Minimum documentation searched (classification system followed by classification symbols)
Int.Cl[6] C08F10/00-10/14, C08F4/64-4/658

Documentation searched other than minimum documentation to the extent that such documents are included in the fields searched
Jitsuyo Shinan Koho 1926-1996 Toroku Jitsuyo Shinan Koho 1994-1999
Kokai Jitsuyo Shinan Koho 1971-1999 Jitsuyo Shinan Toroku Koho 1996-1999

Electronic data base consulted during the international search (name of data base and, where practicable, search terms used)
CAS ONLINE

C. DOCUMENTS CONSIDERED TO BE RELEVANT

| Category* | Citation of document, with indication, where appropriate, of the relevant passages | Relevant to claim No. |
|---|---|---|
| X | JP, 4-359904, A (Showa Denko K.K.), 14 December, 1992 (14. 12. 92), Claims ; Par. Nos. [0027], [0028] ; Examples (Family: none) | 1, 3, 5, 6 |
| X | JP, 63-89513, A (Mitsubishi Petrochemical Co., Ltd.), 20 April, 1988 (20. 04. 88), Claims ; page 2, lower left column, line 17 to lower right column, line 3 ; page 7, upper right column, lines 9 to 20 ; page 8, upper right column, lines 1 to 18 ; Examples & EP, 261961, B1 & US, 4814314, A | 1, 2, 5, 6 |
| X | JP, 4-272907, A (Mitsubishi Petrochemical Co., Ltd.), 29 September, 1992 (29. 09. 92), Claims ; Par. Nos. [0027] to [0032], [0050] to [0054] ; Examples & EP, 501741, B1 & US, 5385993, A | 1, 2, 5, 6 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 12 October, 1999 (12. 10. 99) | 26 October, 1999 (26. 10. 99) |
| Name and mailing address of the ISA/ Japanese Patent Office | Authorized officer |
| Facsimile No. | Telephone No. |

Form PCT/ISA/210 (second sheet) (July 1992)

INTERNATIONAL SEARCH REPORT

International application No.
PCT/JP99/04867

C (Continuation). DOCUMENTS CONSIDERED TO BE RELEVANT

| Category* | Citation of document, with indication, where appropriate, of the relevant passages | Relevant to claim No. |
|---|---|---|
| X | JP, 10-158318, A (Tokuyama Corp.), 16 June, 1998 (16. 06. 98), Claims ; Par. Nos. [0001], [0077] ; Examples (Family: none) | 1, 4, 5, 6 |
| A | JP, 6-228224, A (Fina Technology, Inc.), 16 August, 1994 (16. 08. 94), Claims & EP, 607771, A1 | 1-6 |
| A | JP, 4-226109, A (BASF AG.), 14 August, 1992 (14. 08. 92), Claims ; Par. Nos. [0001], [0008] to [0024] ; Examples & EP, 463406, B1 & US, 5536789, A | 1-6 |
| A | JP, 1-36607, A (Hoechst AG.), 7 February, 1989 (07. 02. 89), Claims ; Examples & EP, 302242, B1 & US, 4859749, A | 1-6 |
| A | JP, 2-18405, A (Union Carbide Corp.), 22 January, 1990 (22. 01. 90), Claims ; Examples & EP, 341723, B1 | 1-6 |
| A | JP, 4-227604, A (Union Carbide Chemicals and Plastic Co., Inc.), 17 August, 1992 (17. 08. 92), Claims ; Examples & EP, 435250, A2 & US, 5068489, A | 1-6 |
| A | JP, 5-339319, A (Mitsubishi Petrochemical Co., Ltd.), 21 December, 1993 (21. 12. 93), Claims ; Examples & EP, 575118, B1 | 1-6 |

Form PCT/ISA/210 (continuation of second sheet) (July 1992)